(19) **Europäisches Patentamt**
**European Patent Office**
**Office européen des brevets**

(11) **EP 4 598 214 A1**

(12) **EUROPEAN PATENT APPLICATION**
published in accordance with Art. 153(4) EPC

(43) Date of publication:
06.08.2025 Bulletin 2025/32

(21) Application number: 23872930.5

(22) Date of filing: 20.09.2023

(51) International Patent Classification (IPC):
*H04W 72/23* (2023.01)    *H04W 72/04* (2023.01)
*H04W 72/21* (2023.01)    *H04W 8/24* (2009.01)
*H04L 5/00* (2006.01)    *H04W 72/12* (2023.01)
*H04B 7/0404* (2017.01)

(52) Cooperative Patent Classification (CPC):
**H04B 7/0404; H04L 5/00; H04W 8/24; H04W 72/04;
H04W 72/12; H04W 72/21; H04W 72/23**

(86) International application number:
**PCT/KR2023/014261**

(87) International publication number:
**WO 2024/071812 (04.04.2024 Gazette 2024/14)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: 29.09.2022  KR 20220124769
04.11.2022  KR 20220146517

(71) Applicant: **LG Electronics Inc.**
**Yeongdeungpo-gu
Seoul 07336 (KR)**

(72) Inventors:
• **CHOI, Seunghwan**
**Seoul 06772 (KR)**
• **YANG, Suckchel**
**Seoul 06772 (KR)**
• **KIM, Seonwook**
**Seoul 06772 (KR)**

(74) Representative: **Plasseraud IP**
**104 Rue de Richelieu
CS92104
75080 Paris Cedex 02 (FR)**

(54) **METHOD AND DEVICE FOR TRANSMITTING OR RECEIVING SIGNAL IN WIRELESS
COMMUNICATION SYSTEM**

(57)    A method and a device for transmitting or receiv-ing a signal in a wireless communication system, dis-closed in the present specification, allow uplink switching to be performed among three or more bands. To reduce the complexity of a terminal, a part of uplink switching which can occur among the three or more bands may be restricted or allowed.

【FIG. 5】

Configure at least three UL bands —S501

UL transmit in all or some of configured UL bands —S503

Description

TECHNICAL FIELD

The present disclosure relates to a method and apparatus for use in a wireless communication system.

BACKGROUND

Generally, a wireless communication system is developing to diversely cover a wide range to provide such a communication service as an audio communication service, a data communication service and the like. The wireless communication is a sort of a multiple access system capable of supporting communications with multiple users by sharing available system resources (e.g., bandwidth, transmit power, etc.). For example, the multiple access system may include one of code division multiple access (CDMA) system, frequency division multiple access (FDMA) system, time division multiple access (TDMA) system, orthogonal frequency division multiple access (OFDMA) system, single carrier frequency division multiple access (SC-FDMA) system, and the like.

DISCLOSURE

Technical Problem

The object of the present disclosure is to provide a signal transmission and reception method for efficiently transmitting and receiving signals in a wireless communication system and apparatus therefor.

It will be appreciated by persons skilled in the art that the objects that could be achieved with the present disclosure are not limited to what has been particularly described hereinabove and the above and other objects that the present disclosure could achieve will be more clearly understood from the following detailed description.

Technical Solution

The present disclosure provides a method and apparatus for transmitting and receiving a signal in a wireless communication system.

According to an aspect of the present disclosure, a method of transmitting and receiving a signal by a user equipment (UE) in a wireless communication system includes configuring at least three uplink (UL) bands, and performing UL transmissions in all or some of the at least three UL bands, wherein UL switching is triggered based on the UL transmissions, and for the UL switching, from among all band combinations configured by the at least three UL bands, concurrent transmission in UL bands provided in a specific band combination is limited.

According to another aspect of the present disclosure, a method of transmitting and receiving a signal by a base station (BS) in a wireless communication system includes configuring at least three uplink (UL) bands in a user equipment (UE), and receiving, from the UE, UL transmissions in all or some of the at least three UL bands, wherein UL switching is triggered based on the UL transmissions, and for the UL switching, from among all band combinations configured by the at least three UL bands, concurrent transmission in UL bands provided in a specific band combination is limited.

In another aspect of the present disclosure, there are provided an apparatus, a processor, and a storage medium for performing the signal transmission and reception method.

The apparatus may include an autonomous driving vehicle communicable with at least a UE, a network, and another autonomous driving vehicle other than the communication apparatus.

The above-described aspects of the present disclosure are only some of the preferred embodiments of the present disclosure, and various embodiments reflecting the technical features of the present disclosure may be derived and understood from the following detailed description of the present disclosure by those skilled in the art.

ADVANTAGEOUS EFFECTS

According to one embodiment of the present disclosure, when control and data signals are transmitted and received between communication devices, the signals may be transmitted and received more efficiently based on operations different from those in the prior art

It will be appreciated by persons skilled in the art that the effects that can be achieved with the present disclosure are not limited to what has been particularly described hereinabove and other advantages of the present disclosure will be more clearly understood from the following detailed description taken in conjunction with the accompanying drawings.

## BRIEF DESCRIPTION OF THE DRAWINGS

FIG. 1 illustrates a radio frame structure.
FIG. 2 illustrates a resource grid during the duration of a slot.
FIG. 3 illustrates a self-contained slot structure.
FIGS. 4 to 5 are diagrams illustrating methods for transmitting and receiving a signal according to the embodiments of the present disclosure.
FIGS. 6 to 9 illustrate devices according to an embodiment of the present disclosure.

## MODE FOR INVENTION

The following technology may be used in various wireless access systems such as code division multiple access (CDMA), frequency division multiple access (FDMA), time division multiple access (TDMA), orthogonal frequency division multiple access (OFDMA), single carrier frequency division multiple access (SC-FDMA), and so on. CDMA may be implemented as a radio technology such as universal terrestrial radio access (UTRA) or CDMA2000. TDMA may be implemented as a radio technology such as global system for mobile communications (GSM)/general packet radio service (GPRS)/enhanced data rates for GSM evolution (EDGE). OFDMA may be implemented as a radio technology such as institute of electrical and electronics engineers (IEEE) 802.11 (wireless fidelity (Wi-Fi)), IEEE 802.16 (worldwide interoperability for microwave access (WiMAX)), IEEE 802.20, evolved UTRA (E-UTRA), and so on. UTRA is a part of universal mobile telecommunications system (UMTS). 3rd generation partnership project (3GPP) long term evolution (LTE) is a part of evolved UMTS (E-UMTS) using E-UTRA, and LTE-advanced (LTE-A) is an evolution of 3GPP LTE. 3GPP new radio or new radio access technology (NR) is an evolved version of 3GPP LTE/LTE-A.

For clarity of description, the present disclosure will be described in the context of a 3GPP communication system (e.g., LTE and NR), which should not be construed as limiting the spirit of the present disclosure. LTE refers to a technology beyond 3GPP TS 36.xxx Release 8. Specifically, the LTE technology beyond 3GPP TS 36.xxx Release 10 is called LTE-A, and the LTE technology beyond 3GPP TS 36.xxx Release 13 is called LTE-A pro. 3GPP NR is the technology beyond 3GPP TS 38.xxx Release 15. LTE/NR may be referred to as a 3GPP system. "xxx" specifies a technical specification number. LTE/NR may be generically referred to as a 3GPP system. For the background technology, terminologies, abbreviations, and so on as used herein, refer to technical specifications published before the present disclosure. For example, the following documents may be referred to.

3GPP NR

- 38.211: Physical channels and modulation

- 38.212: Multiplexing and channel coding

- 38.213: Physical layer procedures for control

- 38.214: Physical layer procedures for data

- 38.300: NR and NG-RAN Overall Description

- 38.331: Radio Resource Control (RRC) protocol specification

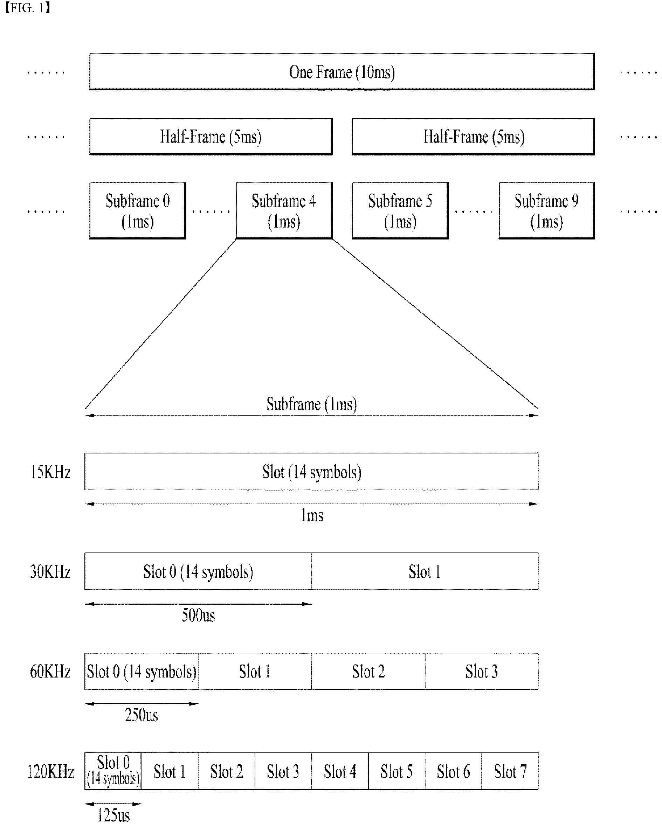

FIG. 1 illustrates a radio frame structure used for NR.
In NR, UL and DL transmissions are configured in frames. Each radio frame has a length of 10ms and is divided into two 5-ms half-frames. Each half-frame is divided into five 1-ms subframes. A subframe is divided into one or more slots, and the number of slots in a subframe depends on a subcarrier spacing (SCS). Each slot includes 12 or 14 OFDM(A) symbols according to a cyclic prefix (CP). When a normal CP is used, each slot includes 14 OFDM symbols. When an extended CP is used, each slot includes 12 OFDM symbols. A symbol may include an OFDM symbol (or a CP-OFDM symbol) and an SC-FDMA symbol (or a discrete Fourier transform-spread-OFDM (DFT- s-OFDM) symbol).
Table 1 exemplarily illustrates that the number of symbols per slot, the number of slots per frame, and the number of slots per subframe vary according to SCSs in a normal CP case.

[Table 1]

| SCS (15*2^u) | N$^{slot}_{symb}$ | N$^{frame,u}_{solot}$ | N$^{subfiame,u}_{slot}$ |
|---|---|---|---|
| 15KHz (u=0) | 14 | 10 | 1 |
| 30KHz (u=1) | 14 | 20 | 2 |
| 60KHz (u=2) | 14 | 40 | 4 |
| 120KHz (u=3) | 14 | 80 | 8 |
| 240KHz (u=4) | 14 | 160 | 16 |
| * N$^{slot}_{symb}$: number of symbols in a slot<br>* N$^{frame,u}_{slot}$: number of slots in a frame<br>*N$^{subframe,u}_{slot}$: number of slots in a subframe | | | |

Table 2 illustrates that the number of symbols per slot, the number of slots per frame, and the number of slots per subframe vary according to SCSs in an extended CP case.

[Table 2]

| SCS (15*2^u) | N$^{slot}_{symb}$ | N$^{frame,u}_{slot}$ | N$^{subframe,u}_{slot}$ |
|---|---|---|---|
| 60KHz (u=2) | 12 | 40 | 4 |

In the NR system, different OFDM(A) numerologies (e.g., SCSs, CP lengths, and so on) may be configured for a plurality of cells aggregated for one UE. Accordingly, the (absolute time) duration of a time resource (e.g., a subframe, a slot, or a transmission time interval (TTI)) (for convenience, referred to as a time unit (TU)) composed of the same number of symbols may be configured differently between the aggregated cells.

In NR, various numerologies (or SCSs) may be supported to support various 5th generation (5G) services. For example, with an SCS of 15 kHz, a wide area in traditional cellular bands may be supported, while with an SCS of 30 kHz or 60 kHz, a dense urban area, a lower latency, and a wide carrier bandwidth may be supported. With an SCS of 60 kHz or higher, a bandwidth larger than 24.25 kHz may be supported to overcome phase noise.

An NR frequency band may be defined by two types of frequency ranges, FR1 and FR2. FR1 and FR2 may be configured as described in Table 3 below. FR2 may be millimeter wave (mmW).

[Table 3]

| Frequency Range designation | Corresponding frequency range | Subcarrier Spacing |
|---|---|---|
| FR1 | 450MHz - 7125MHz | 15, 30, 60kHz |
| FR2 | 24250MHz - 52600MHz | 60, 120, 240kHz |

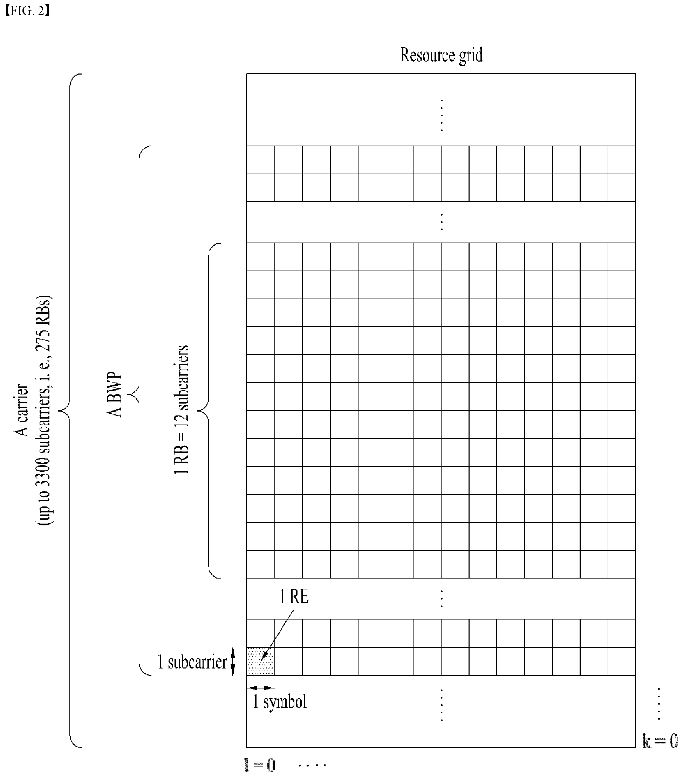

FIG. 2 illustrates a resource grid during the duration of one slot.

A slot includes a plurality of symbols in the time domain. For example, one slot includes 14 symbols in a normal CP case and 12 symbols in an extended CP case. A carrier includes a plurality of subcarriers in the frequency domain. A resource block (RB) may be defined by a plurality of (e.g., 12) consecutive subcarriers in the frequency domain. A plurality of RB interlaces (simply, interlaces) may be defined in the frequency domain. Interlace $m \in \{0, 1, ..., M-1\}$ may be composed of (common) RBs {m, M+m, 2M+m, 3M+m,...}. M denotes the number of interlaces. A bandwidth part (BWP) may be defined by a plurality of consecutive (physical) RBs ((P)RBs) in the frequency domain and correspond to one numerology (e.g., SCS, CP length, and so on). A carrier may include up to N (e.g., 5) BWPs. Data communication may be conducted in an active BWP, and only one BWP may be activated for one UE. Each element in a resource grid may be referred to as a resource element (RE), to which one complex symbol may be mapped.

In a wireless communication system, a UE receives information from a BS in downlink (DL), and the UE transmits information to the BS in uplink (UL). The information exchanged between the BS and UE includes data and various control information, and various physical channels/signals are present depending on the type/usage of the information exchanged therebetween. A physical channel corresponds to a set of resource elements (REs) carrying information originating from higher layers. A physical signal corresponds to a set of REs used by physical layers but does not carry information originating from the higher layers. The higher layers include a medium access control (MAC) layer, a radio link control (RLC) layer, a packet data convergence protocol (PDCP) layer, a radio resource control (RRC) layer, and so on.

DL physical channels include a physical broadcast channel (PBCH), a physical downlink shared channel (PDSCH), and a physical downlink control channel (PDCCH). DL physical signals include a DL reference signal (RS), a primary synchronization signal (PSS), and a secondary synchronization signal (SSS). The DL RS includes a demodulation reference signal (DM-RS), a phase tracking reference signal (PT-RS), and a channel state information reference signal (CSI-RS). UL physical channel include a physical random access channel (PRACH), a physical uplink shared channel (PUSCH), and a physical uplink control channel (PUCCH). UL physical signals include a UL RS. The UL RS includes a DM-RS, a PT-RS, and a sounding reference signal (SRS).

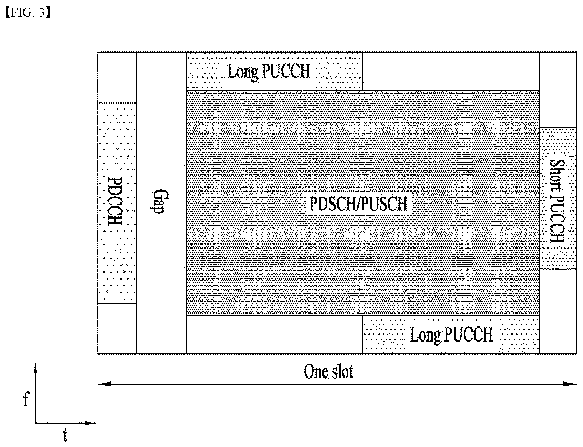

FIG. 3 illustrates a structure of a self-contained slot.

In the NR system, a frame has a self-contained structure in which a DL control channel, DL or UL data, a UL control channel, and the like may all be contained in one slot. For example, the first N symbols (hereinafter, DL control region) in the slot may be used to transmit a DL control channel, and the last M symbols (hereinafter, UL control region) in the slot may be used to transmit a UL control channel. N and M are integers greater than or equal to 0. A resource region (hereinafter, a data region) that is between the DL control region and the UL control region may be used for DL data transmission or UL data transmission. For example, the following configuration may be considered. Respective sections are listed in a temporal order.

In the present disclosure, a base station (BS) may be, for example, a gNode B (gNB).

UL Physical Channels/Signals

(1) PUSCH

A PUSCH may carry UL data (e.g., uplink shared channel (UL-SCH) transport block (TB)) and/or uplink control information (UCI). The PUSCH may be transmitted based on a cyclic prefix orthogonal frequency division multiplexing (CP-OFDM) waveform or a discrete Fourier transform spread OFDM (DFT-s-OFDM) waveform. When the PUSCH is transmitted based on the DFT-s-OFDM waveform, the UE may transmit the PUSCH by applying transform precoding. For example, when the transform precoding is not allowed (e.g., when the transform precoding is disabled), the UE may transmit the PUSCH based on the CP-OFDM waveform. When the transform precoding is allowed (e.g., when the transform precoding is enabled), the UE may transmit the PUSCH based on the CP-OFDM waveform or DFT-s-OFDM waveform. PUSCH transmission may be dynamically scheduled by a PDCCH (dynamic scheduling) or semi-statically scheduled by higher layer signaling (e.g., RRC signaling) (and/or Layer 1 (L1) signaling (e.g., PDCCH)) (configured scheduling (CS)). Therefore, in the dynamic scheduling, the PUSCH transmission may be associated with the PDCCH, whereas in the CS, the PUSCH transmission may not be associated with the PDCCH. The CS may include PUSCH transmission based on a Type-1 configured grant (CG) and PUSCH transmission based on a Type-2 CG. For the Type-1 CG, all parameters for PUSCH transmission may be signaled by the higher layer. For the Type-2 CG, some parameters for PUSCH transmission may be signaled by higher layers, and the rest may be signaled by the PDCCH. Basically, in the CS, the PUSCH transmission may not be associated with the PDCCH.

(2) PUCCH

A PUCCH may carry UCI. The UCI includes the following information.

- Scheduling request (SR): The SR is information used to request a UL-SCH resource.
- Hybrid automatic repeat and request acknowledgement) (HARQ-ACK): The HARQ-ACK is a signal in response to reception of a DL signal (e.g., PDSCH, SPS release PDCCH, etc.). The HARQ-ACK response may include positive ACK (ACK), negative ACK (NACK), DTX (Discontinuous Transmission), or NACK/DTX. The HARQ-ACK may be interchangeably used with A/N, ACK/NACK, HARQ-ACK/NACK, and the like. The HARQ-ACK may be generated on a TB/CBG basis.
- Channel Status Information (CSI): The CSI is feedback information on a DL channel. The CSI includes a channel quality indicator (CQI), a rank indicator (RI), a precoding matrix indicator (PMI), a precoding type indicator (PTI), and so on.

Table 7 shows PUCCH formats. The PUCCH formats may be classified according to UCI payload sizes/transmission lengths (e.g., the number of symbols included in a PUCCH resource) and/or transmission structures. The PUCCH formats may be classified into short PUCCH formats (PUCCH formats 0 and 2) and long PUCCH formats (PUCCH formats 1, 3, and 4) according to the transmission lengths.

[Table 4]

| PUCCH format | Length in OFDM symbols $N_{\text{symb}}^{\text{PUCCH}}$ | Number of bits | Usage | Etc |
|---|---|---|---|---|
| 0 | 1-2 | $\leq 2$ | HARQ, SR | Sequence selection |
| 1 | 4 - 14 | $\leq 2$ | HARQ, [SR] | Sequence modulation |
| 2 | 1-2 | >2 | HARQ, CSI, [SR] | CP-OFDM |
| 3 | 4-14 | >2 | HARQ, CSI, [SR] | DFT-s-OFDM (no UE multiplexing) |
| 4 | 4-14 | >2 | HARQ, CSI, [SR] | DFT-s-OFDM (Pre DFT OCC) |

(0) PUCCH Format 0 (PF0)

- Supportable UCI payload size: up to K bits (e.g., K = 2)
- Number of OFDM symbols included in one PUCCH: 1 to X symbols (e.g., X = 2)
- Transmission structure: only a UCI signal is configured with no DM-RS, and a UCI state is transmitted by selecting and transmitting one of a plurality of sequences.

(1) PUCCH Format 1 (PF1)

- Supportable UCI payload size: up to K bits (e.g., K = 2)
- Number of OFDM symbols included in one PUCCH: Y to Z symbols (e.g., Y = 4 and Z = 14)
- Transmission structure: UCI and a DM-RS are configured in different OFDM symbols based on time division multiplexing (TDM). For the UCI, a specific sequence is multiplied by a modulation symbol (e.g., QPSK symbol). A cyclic shift/orthogonal cover code (CS/OCC) is applied to both the UCI and DM-RS to support code division multiplexing (CDM) between multiple PUCCH resources (complying with PUCCH format 1) (in the same RB).

(2) PUCCH Format 2 (PF2)

- Supportable UCI payload size: more than K bits (e.g., K = 2)
- Number of OFDM symbols included in one PUCCH: 1 to X symbols(e.g., X = 2)
- Transmission structure: UCI and a DMRS (DM-RS) are configured/mapped in/to the same symbol based on frequency division multiplexing (FDM), and encoded UCI bits are transmitted by applying only an inverse fast Fourier transform (IFFT) thereto with no DFT.

(3) PUCCH Format 3 (PF3)

- Supportable UCI payload size: more than K bits (e.g., K = 2)
- Number of OFDM symbols included in one PUCCH: Y to Z symbols (e.g., Y = 4 and Z = 14)
- Transmission structure: UCI and a DMRS are configured/mapped in/to different symbols based on TDM. Encoded UCI bits are transmitted by applying a DFT thereto. To support multiplexing between multiple UEs, an OCC is applied to the UCI, and a CS (or interleaved frequency division multiplexing (IFDM) mapping) is applied to the DM-RS before the DFT.

(4) PUCCH Format 4 (PF4 or F4)

- Supportable UCI payload size: more than K bits (e.g., K = 2)

- Number of OFDM symbols included in one PUCCH: Y to Z symbols (e.g., Y = 4 and Z = 14)

- Transmission structure: UCI and a DMRS are configured/mapped in/to different symbols based on TDM. The DFT is applied to encoded UCI bits with no multiplexing between UEs.

## Uplink switching with 3 or 4 uplink bands

The above contents are applicable in combination with methods proposed in the present disclosure, which will be described later. Alternatively, the contents may clarify the technical features of the methods proposed in the present disclosure.

In addition, the following methods may be equally applied to the above-described NR system (licensed bands) or shared spectrum. Thus, it is obvious that the terms, expressions, and structures in this document may be modified to be suitable for the system in order to implement the technical idea of the present disclosure in the corresponding system.

Generally, due to a size of a UE, the number of antennas to be installed on the corresponding UE is limited. A UE with N transmission chains via N antennas may support up to N 1-port UL transmissions simultaneously or up to N-port UL transmissions. A method is required to support a UE with a limited transmission chain to perform UL transmission effectively. Hereinafter, implementations of this specification for UL transmission (Tx) switching are described. Most UEs developed to date support up to two Tx chains, and thus the implementations of this specification are described below assuming that the UE supports UL transmission through up to two Tx chains, i.e., up to two ports. However, implementations of this specification are not limited to 1-port or 2-port UL transmission, but may also be applied to N-port UL transmission, where N may be greater than 2.

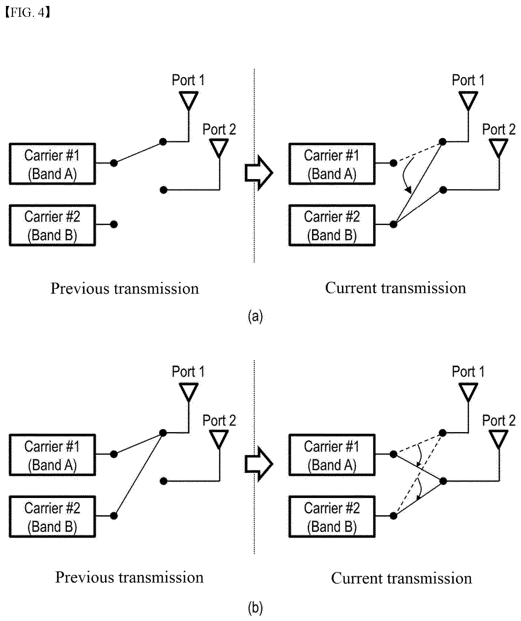

FIG. 4 is a diagram illustrating a concept of UL transmission switching.

To increase the throughput and efficiency of UL transmission, NR Rel-16 provides UL Tx switching (UTS), which switches Tx chain(s) connected to UL carrier(s) under a certain condition, for the purpose of enabling a UE to effectively perform 1-port UL transmission or 2-port UL transmission by using up to two Tx chains. FIG. 4(a) illustrates 1 Tx-2Tx switching between two carriers/bands, and FIG. 4(b) illustrates 2Tx-2Tx switching between two carriers/bands.

For example, if UL transmission (hereinafter, "previous transmission") is performed on carrier #1 with 1 Tx chain, and then UL transmission (hereinafter, "current transmission") is configured/instructed to be performed on another carrier #2 with 2 Tx chains, the UE may switch the Tx chain connected to carrier #1 to carrier #2 to enable 2-port UL transmission on carrier #2. These UTS configuration and switching method may be applied to band combinations corresponding to evolved-universal terrestrial radio access new-radio-dual connectivity (EN-DC) without supplementary UL (SUL), standalone SUL, and inter-band CA. In NR Rel-17, an additional condition is introduced to extend the 1Tx-2Tx switching (i.e., switching between 1 Tx chain and 2 Tx chain) of existing NR Rel-16 to 2Tx-2Tx switching (i.e., switching between 2 Tx chain and 2 Tx chain), and at the same time, UTS between two carriers introduced in NR Rel-16 is extended to allow UTS between two different bands (e.g., 1 carrier in one band and 2 contiguous carriers in another band).

When a certain condition is satisfied and the UE is configured with uplinkTxSwitching via RRC signaling, the UE may omit UL transmission during uplink switching gap NTx1-Tx2. For example, when certain conditions are satisfied and the UE is configured with uplinkTxSwitching via RRC signaling, the UE omits all UL transmission(s), including UL transmission scheduled via DCI and UL transmissions configured by higher layer signaling (e.g., configured grant-based PUSCH), during a UL switching gap $N_{Tx1-Tx2}$. The switching gap NTx1-Tx2 may be indicated by uplinkTxSwitchingPeriod2T2T provided from the UE to the BS via UE capability report when uplinkTxSwitching-2T-Mode is configured via RRC signaling, otherwise the switching gap NTx1-Tx2 may be indicated by uplinkTxSwitchingPeriod provided from the UE to the BS via UE capability report. Here, the RRC configuration uplinkTxSwitching may be provided to the UE as included in a configuration regarding a serving cell, and may include uplinkTxSwitchingPeriodLocation indicating whether a location of a UL Tx switching period is configured on the UL carrier in case of inter-band UL CA, SUL or (NG)EN-DC, and uplinkTxSwitchingCarrier indicating that the configured carrier is carrier 1 or carrier 2 for dynamic UL Tx switching. The RRC parameter uplinkTxSwitching-2T-Mode indicates that a 2Tx-2Tx switching mode is configured for inter-band UL CA or SUL, in which case a switching gap duration for triggered UL switching may be equal to a switching time capability value reported for the switching mode. When the RRC parameter uplinkTxSwitching-2T-Mode is not provided and uplinkTxSwitching is configured, it may be interpreted that 1Tx-2Tx UTS is configured, in which case there may be one UL (or one UL band in case of intra-band) configured with uplinkTxSwitching.

When the UE indicates the capability for UL switching for a band combination and configures the band combination to MCG using E-UTRA radio access and SCG using NR radio access, to UL CA, or to a serving cell with two UL carriers with higher layer (e.g. RRC) parameter supplementary Uplink, the switching gap may be present under certain conditions. For example, the following tables are taken from 3GPP TS 38.214 V17.1.0 and illustrate UTS conditions.

When UL switching is triggered for UL transmission starting at $T_0$, which is after $T_0 - T_{offset}$, the UE is not expected to cancel the UL switching, or to trigger any other new UL switching that occurs before $T_0$ for any other UL transmission scheduled after $T_0 - T_{offset}$, where $T_{offset}$ may be a UE processing procedure time defined for UL transmission triggering switching (e.g. see S5.3, S5.4, S6.2.1 and S6.4 of 3GPP TS 38.214 and S9 of 3GPP TS 38.213). The UE is not expected to perform more than one UL switching in a slot with $u_{UL} = \max(u_{UL,1}, u_{UL,2})$, where $u_{UL,1}$ corresponds to a subcarrier spacing of an active UL BWP of one UL carrier before the switching gap and $u_{UL,2}$ corresponds to the subcarrier spacing of the active UL BWP of another UL carrier after the switching gap.

[Table 5]

**6.1.6.1 Uplink switching for EN-DC**

For a UE indicating a capability for uplink switching with *BandCombination-UplinkTxSwitch* for a band combination, and if it is for that band combination configured with a MCG using E-UTRA radio access and with a SCG using NR radio access (EN-DC), if the UE is configured with uplink switching with parameter *uplinkTxSwirching,*

- for the UE configured with *switchedUL* by the parameter *uplinkTxSwichingOption,* when the UE is to transmit in the uplink based on DCI(s) received before $T_0 - T_{offset}$ or based on a higher layer configuration(s):
    - when the UE is to transmit an NR uplink that takes place after an E-UTRA uplink on another uplink carrier then the UE is not expected to transmit for the duration of $N_{Tx1-Tx2}$ on any of the two carriers.
    - when the UE is to transmit an E-UTRA uplink that takes place after an NR uplink on another uplink carrier then the UE is not expected to transmit for the duration of $N_{Tx1-Tx2}$ on any of the two carriers.
    - the UE is not expected to transmit simultaneously on the NR uplink and the E-UTRA uplink. If the UE is scheduled or configured to transmit any NR uplink transmission overlapping with an E-UTRA uplink transmission, the NR uplink transmission is dropped,
- for the UE configured with *uplinkTxSwitchingOption* set to 'dualUL', when the UE is to transmit in the uplink based on DCI(s) received before $T_0 - T_{offset}$ or based on a higher layer configuration(s):
    - when the UE is to transmit an NR two-port uplink that takes place after an E-UTRA uplink on another uplink carrier then the UE is not expected to transmit for the duration of $N_{Tx1-Tx2}$ on any of the two carriers.
    - when the UE is to transmit an E-UTRA uplink that takes place after an NR two-port uplink on another uplink carrier then the UE is not expected to transmit for the duration of $N_{Tx1-Tx2}$ on any of the two carriers.
    - the UE is not expected to transmit simultaneously a two- port transmission on the NR uplink and the E-UTRA uplink.
- in all other cases the UE is expected to transmit normally all uplink transmissions without interruptions.
- when the UE is configured with *tdm-PatternConfig* or by *tdm-PatternConfig2*
    - for the E-UTRA subframes designated as uplink by the configuration, the UE assumes the operation state in which one-port E-UTRA uplink can be transmitted.
    - for the E-UTRA subframes other than the ones designated as uplink by the configuration, the UE assumes the operation state in which two-port NR uplink can be transmitted.

[Table 6]

**6.1.6.2 Uplink switching for carrier aggregation**

For a UE indicating a capability for uplink switching with *BandCombination-UplinkTxSwitch* or *uplinkTxSwirching-Period2T2T* for a band combination, and if it is for that band combination configured with uplink carrier aggregation:
- If the UE is configured with uplink switching with parameter *uplinkTxSwitching,* when the UE is to transmit in the uplink based on DCI(s) received before $T_0 - T_{offset}$ or based on a higher layer configuration(s):
    - When the UE is to transmit a 2-port transmission on one uplink carrier on one band and if the preceding uplink transmission is a 1-port transmission on another uplink carrier on another band, then the UE is not expected to transmit for the duration of $N_{Tx1-Tx2}$ on any of the carriers.
    - When the UE is to transmit a 1-port transmission on one uplink carrier on one band and if the preceding uplink transmission is a 2-port transmission on another uplink carrier on another band, then the UE is not expected to transmit for the duration of $N_{Tx1-Tx2}$ on any of the carriers.
    - For the UE configured with *uplinkTxSwitchingOption* set to 'switchedUL', when the UE is to transmit a 1-port transmission on one uplink carrier on one band and if the preceding uplink transmission was a 1-port transmission on another uplink carrier on another band, then the UE is not expected to transmit for the duration of $N_{Tx1-Tx2}$ on any of the carriers.

(continued)

- For the UE configured with *uplinkTxSwitchingOptions* set to 'dualUL', when the UE is to transmit a 2-port transmission on one uplink carrier on one band and if the preceding uplink transmission was a 1-port transmission on a carrier on the same band and the UE is under the operation state in which 2-port transmission cannot be supported in the same band, then the UE is not expected to transmit for the duration of $N_{Tx1-Tx2}$ on any of the carriers.

- For the UE configured with *uplinkTxSwitchingOption* set to 'dualUL', when the UE is to transmit a 1-port transmission on one uplink carrier on one band and if the preceding uplink transmission was a 1-port transmission on another uplink carrier on another band and the UE is under the operation state in which 2-port transmission can be supported on the same: uplink carrier, then the UE is not expected to transmit for the duration of $N_{Tx1-Tx2}$ on any of the carriers.

- For the UE configured with *uplinkTxSwitchingOption* set to 'dualUL', if the UE is configured with *OneT* with *uplink-TxSwitching-DualUL-TxState,* when the UE is under the operation state in which 2-port transmission can be supported on one carrier on one band followed by no transmission on any carrier on the same band and 1-port transmission on the other carrier on another band the UE shall consider this as if 1-port transmission was transmitted on both uplinks, otherwise the UE shall consider this as if 2-port transmission look place on the transmitting carrier.

- If *uplinkTxSwitching-2T-Mode* is configured, when the UE is to transmit a 2-port transmission on one uplink carrier on one band and if the preceding uplink transmission is a 2-port transmission on another uplink carrier on another band, then the UE is not expected to transmit for the duration of $N_{Tx1-Tx2}$ on any of the carriers.

- The UE is not expected to be scheduled or configured with uplink transmissions that result in simultaneous transmission on two antenna ports on one uplink carrier on one band, and any transmission on another uplink carrier on another band.

- In all other cases the UE is expected to transmit normally all uplink transmissions without interruptions.

[Table 7]

6.1.6.3 Uplink switching for supplementary uplink

For a UE indicating a capability for uplink switching with *BandCombination-UplinkTxSwitch* for a band combination, and if it is for that band combination configured in a serving cell with two uplink carriers with higher layer parameter *supplementaryUplink*:

- If the UE is configured with uplink switching with parameter *uplinkTxSwitching*,
    - If the UE is to transmit any uplink channel or signal on a different uplink on a different band from the preceding transmission occasion based on DCI(s) received before $T_0$ - $T_{offset}$ or based on a higher layer configuration(s), then the UE assumes that an uplink switching is triggered in a duration of switching gap $N_{Tx1-Tx2}$, where $T_0$ is the start time of the first symbol of the transmission occasion of the uplink channel or signal and $T_{offset}$ is the preparation procedure time of the transmission occasion of the uplink channel or signal given in clause 5.3, clause 5.4, clause 6.2.1. clause 6.4 and in clause 9 of [6, TS 38.213], respectively. During the switching gap $N_{Tx1-Tx2}$, the UE is not expected to transmit on any of the two uplinks.
- In all other cases the UE is expected to transmit normally all uplink transmissions without interruptions.

NR supports a wide spectrum across various frequency ranges. The availability of a spectrum is expected to increase in a 5G advanced market due to repurposing of bands originally used in previous generation cellular networks. Especially for a low-frequency FR1 band, an available spectral block tends to be more fragmented and distributed over narrower bandwidths. For an FR2 band and some FR1 bands, a multicarrier operation within a band is required as an available spectrum is to be widened. To satisfy diverse spectrum requirements, it is important to provide higher throughput and adequate coverage in a network by using these distributed spectrum band or wider bandwidth spectrum in a more spectrum/power efficient and flexible manner. For a multicarrier UL operation, the current specification has several limitations. For example, a 2TX UE may be configured with up to two UL bands to be changed only by RRC reconfiguration, and UL Tx switching may only be performed between the two UL bands for the 2Tx UE. Instead of RRC-based cell(s) reconfiguration, dynamically selecting carriers with UL Tx switching based on, for example, data traffic, TDD DL/UL configuration, bandwidth and channel conditions of each band may potentially lead to a higher UL data rate, spectrum utilization, and UE capacity.

For a higher UL data rate, spectrum utilization, and UE capacity, UTS between more than two bands is currently considered. Hereinafter, UTS trigger condition(s), UTS-related configuration method(s), and/or UTS operation method(s) required to support UTS between multiple bands (e.g., three or more bands) according to some implementations of this specification are described.

Hereinafter, a cell may be interpreted according to context. For example, the cell may mean a serving cell. The cell may include one DL component carrier (CC) and 0 to 2 UL CCs, but implementations of this specification described below are not limited thereto. In the following, unless otherwise specified, the terms cell and CC may be used interchangeably. In some implementations of this specification, the cell/CC may be replaced with an (active) BWP within the serving cell. Unless otherwise specified, in the implementations of this specification described below, the cell/CC may be used as a concept encompassing PCell, SCell, PsCell, and the like, which may be configured/expressed in a carrier aggregation (CA)/dual connectivity (DC) scenario.

Hereinafter, the term "band" means a frequency band, and the term "band" may be used interchangeably with the terms "carrier" and/or "cell" within the band. In this case, each band may include one carrier or multiple (e.g., two) contiguous (or non-contiguous) carriers. The proposed methods described below may be applied to inter-band UL CA, intra-band UL CA, NR-DC, EN-DC, (standalone) SUL scenarios and related band combinations (unless otherwise specified).

For convenience of explanation in the implementations of this specification described below, the following notation is used.

- When UTS occurs, it may be expressed as a UTS trigger.
- Band (or carrier) related to UTS: This may refer to a band/carrier before and after UTS occurs.
- A Tx chain transition time caused by UTS is denoted as a UTS gap (or UTS period). During the UTS gap, no UL transmission occurs in the band/carrier related to the UTS. The UTS gap (switching gap) and the UTS period (switching period) may be specifically distinguished as follows.

   ▪ Switching period: Switching time reported by UE. Basically, this is a band pair unit including two bands, and is reported as one of values of {35 us, 140 us, and 210 us}. For a specific switching case, a single value may be reported as a band combination unit including three or more bands. In this specification, it may also be expressed as a UTS period/time or a switching period.
   ▪ Switching gap: Time duration during which UL transmission in all (or some) bands related to a single UL Tx switching event due to this. The switching gap may be determined as a switching period (reported by a UE) for the corresponding Tx switching or determined by using the switching period of each band pair related to the corresponding Tx switching.

For example, for A(1T)+B(1T)->C(2T) switching, in which transmission occurs using 2 Tx chains on a band C while 1 Tx chain is connected to a band A and 1 Tx chain is connected to a band B, if a band combination {A+B, C} is reported by the UE, the switching gap is determined as a reported value. If not reported, the switching gap may be determined as a value derived using the switching period AB (period_AB) for a band pair including the bands A and B and the switching period AC (period_AC) for a band pair including the bands A and C. In this specification, it may also be expressed as a UTS gap/interval or a switching interval.

- A 1 Tx chain may be expressed as 1T, and a 2Tx chain may be expressed as 2T.
- 1-port UL transmission may be expressed as 1p, and 2-port UL transmission may be expressed as 2p.
- When 1 Tx chain or 2 Tx chains are connected to a certain band A (and/or carrier(s) belonging to the band A), these states may be expressed as A(1T) and A(2T), respectively.
- When 1 Tx chain is connected to each of two specific bands A (and/or carrier(s) belonging to band A) and band B (and/or carrier(s) belonging to band A), this state may be expressed as A(1T)+B(1T).
- UL transmission may mean any UL channel or UL signal supported by NR, and the like.
- "Previous transmission" may mean the most recent UL transmission performed by the UE prior to UTS triggering, and "current transmission" may mean UL transmission performed by the UE immediately (or simultaneously) with UTS triggering. The term "transmission" hereinafter may mean "UL transmission".
- The expression that UL transmission occurs may mean UL transmission scheduled via DCI for a UL grant and/or UL transmission configured via higher layer signaling (e.g., RRC signaling) (e.g., configured grant UL transmission).
- When 1-port UL transmission occurs in a specific band A (and/or carrier(s) belonging to band A), it may be expressed as A(1p), and when 2-port UL transmission occurs, it may be expressed as A(2p).
- When 1-port UL transmission occurs in two specific bands, e.g., band A and band B, (and/or carrier(s) belonging to the corresponding band), it may be expressed as A(1p)+B(1p).

Some implementations of this specification described below are described in terms of UTS generation between two bands in a situation in which four bands/carriers are configured (or activated). However, the same method(s) as the implementations of this specification described below may also be applied to UTS that occurs in a situation in which a smaller number of bands (e.g., 3) are configured/activated. The same method(s) as the implementations of this specification described below may also be applied to UTS that occurs in a situation in which a larger number of bands (e.g., 5) are configured/activated.

Some implementations of this specification described below are described without distinguishing between 1Tx-2Tx switching or 2Tx-2Tx switching. However, some implementations may be specifically applicable to 1Tx-2Tx switching and/or 2Tx-2Tx switching.

In some implementations of this specification described below, the "simultaneous transmission" in multiple bands may mean that a start time (e.g., start symbol) of UL transmissions in each of the corresponding multiple bands coincide and/or some (or all) of the UL transmission resources/periods in each of the multiple bands overlap in time.

Unless otherwise specified, the band pair or band combination mentioned in this specification may mean any (specific) band combination, a combination (pair) of two bands belonging to any (specific) band combination, or a combination (pair) of two bands unrelated to any (specific) band combination. Therefore, the two bands may belong to different band combinations.

Table 8 and Table 9 represent a state in which Tx chains are connected for each band (i.e., Number of Tx chains) and an antenna port mapping (in all cases) to be used for UL transmission for each Tx chain state when 3 or 4 UL bands (and/or carriers) are configured for UL Tx switching, respectively. If one Tx chain is connected to a specific band and/or carrier within the corresponding band, it is expressed as '1T', if two Tx chains are connected, it is expressed as '2T', and if not connected, it is expressed as '0T'. If UL transmission is scheduled (via DCI) or configured (via higher layer signaling/configuration) for a specific band and/or carrier within the band and is transmitted using 1 antenna port, it is expressed as '1P', if UL transmission is performed using 2 antenna ports, it is expressed as '2P', and if there is no scheduling/configuration of UL transmission for the corresponding band and/or carrier within the corresponding band, it is expressed as '0P'. In each table, Band A, Band B, Band C, and (Band D) may be understood as representing three (or four) different bands rather than representing specific (frequency) bands. Expressions such as Band A (Carrier 1) do not only mean a case in which there is one carrier in Band A, and may also be applied to a case in which the corresponding band includes two or more carriers (intra-band CA relationships), but for the sake of simplicity, it may be understood that it is expressed as follows.

[Table 8]

|  | Number of Tx Chains (Band A + Band B + Band C) | Number of antenna ports for UL transmission Band A(Carrier 1)+Band B(Carrier 2)+Band C(Carrier 3) |
|---|---|---|
| Case 1 | 1T+1T+0T | 1P+1P+0P, 1P+0P+0P, 0P+1P+0P |
| Case 2 | 0T+1T+1T | 0P+1P+1P, 0P+1P+0P, 0P+0P+1P |
| Case 3 | 1T+0T+1T | 1P+0P+1P, 1P+0P+0P, 0P+0P+1P |
| Case 4 | 2T+0T+0T | 2P+0P+0P, 1P+0P+0P |
| Case 5 | 0T+2T+0T | 0P+2P+0P, 0P+1P+0P |
| Case 6 | 0T+0T+2T | 0P+0P+2P, 0P+0P+1P |

[Table 9]

|  | Number of Tx Chains (Band A + Band B + Band C + Band D) | Number of antenna ports for UL transmission Band A(Carrier 1)+Band B(Carrier 2)+Band C(Carrier 3)+Band D(Carrier 1) |
|---|---|---|
| Case 1 | 1T+1T+0T+0T | 1P+1P+0P+0P, 1P+0P+0P+0P, 0P+1P+0P+0P |
| Case 2 | 0T+1T+1T+0T | 0P+1P+1P+0P, 0P+1P+0P+0P, 0P+0P+1P+0P |
| Case 3 | 0T+0T+1T+1T | 0P+0P+1P+IP, 0P+0P+1P+0P, 0P+0P+0P+1P |
| Case 4 | 1T+0T+0T+1T | 1P+0P+0P+1P, 1P+0P+0P+0P, 0P+0P+0P+1P |
| Case 5 | 1T+0T+1T+0T | 1P+0P+1P+0P, 1P+0P+0P+0P, 0P+0P+1P+0P |
| Case 6 | 0T+1T+0T+1T | 0P+1P+0P+1P, 0P+1P+0P+0P, 0P+0P+0P+1P |
| Case 7 | 2T+0T+0T+0T | 2P+0P+0P+0P, 1P+0P+0P+0P |
| Case 8 | 0T+2T+0T+0T | 0P+2P+0P+0P, 0P+1P+0P+0P |
| Case 9 | 0T+0T+2T+0T | 0P+0P+2P+0P, 0P+0P+1P+0P |

(continued)

|  | Number of Tx Chains (Band A + Band B + Band C + Band D) | Number of antenna ports for UL transmission Band A(Carrier 1)+Band B(Carrier 2)+Band C(Carrier 3)+Band D(Carrier 1) |
|---|---|---|
| Case 10 | 0T+0T+0T+2T | 0P+0P+0P+2P, 0P+0P+0P+1P |

When a UL Tx switching operation is configured in three or four bands/carriers as shown in Table 8 and Table 9 above, a UE needs to monitor or manage a larger number of switching cases than an operation in two bands (supported in the conventional Rel-17 UL Tx switching). Because this may increase the implementation complexity of the UE, a method of limiting the UL Tx switching operation to allow only a certain switching case (via UE capability and/or RRC settings).

In this specification, the symbols '-', '■', '♦', and '•' listed at the very beginning of each paragraph may indicate vertical/horizontal relationships between descriptions in each paragraph. In detail, it may mean upper categories in the order of '-', '■', '♦', and '•'. For example, the '■' written after '-' may be an additional explanation for '-'. The '♦' following '■' may be an additional explanation for '■'. The '•' following '♦' may be an additional explanation for '♦'.

**[1] Method of configuring concurrent UL transmission for limited number of switching cases**

In the proposal described below, concurrent UL transmission may mean concurrent UL transmission in two (or more) different bands. Alternatively, it may mean that UL transmission periods scheduled (or configured via RRC) in two (or more) different bands overlap in time (e.g., start symbols of UL transmissions in two bands are the same, or time domain resources of UL transmissions in two bands overlap each other). In this case, the concurrent UL transmission may be scheduled via DCI (e.g., UL grant) or configured via higher layer signaling/configuration such as RRC.

[1-1] For a UE configured with UL Tx switching in 3 or 4 bands (and/or for a band (and/or a carrier within the corresponding band) and/or UL transmission (resource) for a CA configured in the UE), a separate UE capability and/or RRC configuration may be configured to limit (not allow) concurrent UL transmission in a specific band combination or band pair for UL transmissions that trigger UL Tx switching.

Method 1: Method of limiting the maximum number of concurrent UL transmission cases in which it is possible to trigger UL Tx switching or UL Tx switching is allowed.

■ For example,

♦ (Example 1) When a UL Tx switching operation is configured in three bands (e.g., band A, B, or C), up to three different concurrent transmission cases may be configured/scheduled. For example, concurrent transmission in bands A and B (referred to as "concurrent transmission on A+B") may be configured, concurrent transmission in B+C may be configured, or concurrent transmission in A+C may be configured. The UE may report the capability thereof to allow up to $X\_1$ (e.g., $X\_1 < 3$) concurrent UL transmissions. It may be configured by a BS to allow only up to $X\_1$ (e.g., $X\_1 < 3$) concurrent UL transmissions.

♦ (Example 2) When a UL Tx switching operation is configured in four bands (e.g., band A, B, C, and D), up to six different concurrent transmission cases may be configured/scheduled. For example, concurrent transmission may be configured in A+B, A+C, A+D, B+C, B+D or C+D. The UE may report the capability thereof to allow up to $X\_2$ (e.g. $X\_2 < 6$) concurrent UL transmissions. It may be configured by a BS to allow only up to $X\_2$ (e.g. $X\_2 < 3$) concurrent UL transmissions.

■ $X\_1$ and/or $X\_2$ values may be predefined or configured via RRC. The UE may report (preferred) $X\_1$ and/or $X\_2$ via UE capability reporting. RRC configuration and/or UE capability reporting may be performed in units of band combinations or in units of band pairs.

■ A default value of $X\_1$ and/or $X\_2$ (i.e., an $X\_1$ or $X\_2$ value prior to RRC configuration or when RRC configuration is not performed) may be determined.

♦ For example, $X\_1$ may be determined as '3' for 3 bands, or $X\_2$ may be determined as '6' for 4 bands.

• For a band for CA and/or carriers and/or UL transmission (resource) within the corresponding band configured for the UE or a specific cell, all possible concurrent UL transmission cases are allowed for UL Tx switching without separate UE capability reporting and/or RRC configuration. Concurrent UL transmission in specific band combinations or band pair may be limited, with respect to UL transmission that triggers UL Tx switching, via separate UE capability reporting and/or RRC configuration.

♦ As another example, X_1 may be determined as a smaller value for 3 bands, or X_2 may be determined as a smaller value than 6 for 4 bands.

• For a band for CA and/or carriers and/or UL transmission (resource) within the corresponding band configured for the UE (or a specific cell), only certain (some) concurrent UL transmission cases are allowed for UL Tx switching without separate UE capability reporting and/or RRC configuration. Concurrent UL transmission in specific band combinations or band pair may be limited, with respect to UL transmission that triggers UL Tx switching, via separate UE capability reporting and/or RRC configuration.

- Method 2: Method of limiting concurrent UL transmission case containing a specific UL signal or channel, in which it is possible to trigger UL Tx switching or UL Tx switching is allowed.

■ For example,

♦ (Example 1) If one or more of concurrent UL transmissions in two or more bands is a specific SRS, the UL transmission and/or the UL Tx switching resulting therefrom may not be allowed. A specific SRS may be an SRS triggered by DCI format 1_1.

♦ (Example 2) If one or more of concurrent UL transmissions in two or more bands is a specific PUCCH, the UL transmission and/or the UL Tx switching resulting therefrom may not be allowed. The specific PUCCH may be a PUCCH triggered by DCI 1_0 or DCI 1_1.

♦ (Example 3) If one or more of concurrent UL transmissions in two or more bands is a configured UL transmission configured via RRC, or the like, the UL transmission and/or the UL Tx switching resulting therefrom may not be allowed.

♦ (Example 4) If one or more of concurrent UL transmissions in two or more bands is a UL transmission scheduled via one or more DCI, the UL transmission and/or the UL Tx Tx switching resulting therefrom may not be allowed.

♦ (Example 5) A concurrent UL transmission case in which both Tx chains need to be switched due to concurrent UL transmission in two or more bands may not be allowed. For example, if there is 1 Tx chain in each of band A and band B, and 1 port UL in each of band C and band D is scheduled/configured simultaneously, two Tx chains need to be switched from bands A and B to bands C and D, respectively. A concurrent UL transmission case corresponding to this case may not be allowed.

As another example, if there is 2 Tx chain in band A, and 1-port UL in each of band C and band D is scheduled/configured simultaneously, two Tx chains need to be switched from bands A and B to bands C and D, respectively. A concurrent UL transmission case corresponding to this case may not be allowed.

The above concurrent UL transmission cases may not always be allowed for all UEs. Alternatively, whether such concurrent UL transmission is possible may be defined/reported through a UE capability. Alternatively, whether or not such concurrent UL transmission is allowed may be configured by a BS.

■ The UE may report a case in which concurrent transmission (including the above example) is limited through the UE capability. The UE may be configured via RRC for a case in which concurrent transmission (including the above example) is limited. RRC configuration and/or UE capability reporting may be performed in units of band combinations or in units of band pairs.

■ A default value (i.e., concurrent transmission case that is not allowed prior to RRC configuration or when RRC configuration is not performed) may be determined.

♦ For example, concurrent UL transmission may be allowed for all types of UL signals/channels to be configured in the UE prior to separate RRC configuration or when RRC configuration is not performed.

♦ As another example, prior to separate RRC configuration or when RRC configuration is not performed, concurrent UL transmission may be allowed for all types of UL signals/channels to be configured in the UE, except in a case in which both Tx chains are switched.

- Method 3: Method of limiting concurrent UL transmission in two or more bands when switching periods configured for the corresponding bands, in which UL Tx switching is triggered or UL Tx switching is allowed, are different

■ When switching periods configured for multiple bands for which concurrent UL transmission is configured/scheduled or reported by the UE are different between the bands, concurrent transmission in two or more of the corresponding bands may not be allowed.

Alternatively, when a difference between switching periods configured for multiple bands for which concurrent UL transmission is configured/scheduled or reported by the UE exceeds a predefined or configured specific threshold value, concurrent transmission in two or more of the corresponding bands may not be allowed.

■ For example,

♦ When a switching period of 35 usec is reported and/or RRC-configured for bands A and B, and a switching period of 210 usec is reported and/or RRC-configured for bands C and D, concurrent transmission in bands A and C (or A and D, or B and C, or B and D) may not be allowed.

♦ In this case, the UE may report a case in which concurrent transmission is limited depending on a switching period through the UE capability. The UE may be configured via RRC for a case in which concurrent transmission is limited. RRC configuration and/or UE capability reporting may be performed in units of band combinations or in units of band pairs.

■ A default value (i.e., concurrent transmission case that is not allowed prior to RRC configuration or when RRC configuration is not performed) may be determined.

♦ For example, concurrent UL transmission may be allowed for all bands/carriers regardless of a switching period configured in each band/carrier to be configured in the UE prior to separate RRC configuration or when RRC configuration is not performed.

- Method 4: Method of limiting concurrent UL transmission in two or more bands when the 'switchedUL'/'dualUL' setting values, which trigger UL Tx switching or allow UL Tx switching, are different

■ When the 'switchedUL'/'dualUL' values configured for multiple bands for which concurrent UL transmission is configured/scheduled or reported by the UE are different between the bands, concurrent transmission in two or more of the bands may not be allowed.

■ For example,

♦ For any specific four bands A, B, C, and D, if 'switchedUL' is reported and/or RRC configuration is performed for bands A and B, and 'dualUL' is reported and/or RRC configuration is performed for bands C and D, concurrent transmission in bands A and C (or A and D, or B and C, or B and D) may not be allowed.

■ In this case, the UE may report cases in which concurrent transmission is limited according to the 'switchedUL'/'dualUL' configuration value through the UE capability. The UE may be configured via RRC for a case in which such concurrent transmission is limited. RRC configuration and/or UE capability reporting may be performed in units of band combinations or in units of band pairs.

■ A default value (i.e., concurrent transmission case that is not allowed prior to RRC configuration or when RRC configuration is not performed) may be determined.

♦ For example, concurrent UL transmission may be allowed for all bands/carriers regardless of a concurrent transmission option (e.g. 'switchedUL'/'dualUL') configured in each band/carrier to be configured in the UE prior to separate RRC configuration or when RRC configuration is not performed.

- Method 5: Method of limiting concurrent UL transmission in any specific band or concurrent UL transmission in bands containing any specific UL signal/channel, which may trigger UL Tx switching or may be allowed for UL Tx switching

■ In a band in which concurrent UL transmission is configured/scheduled, any specific concurrent transmission case in two or more bands may not be allowed.

In other words, (generalizing) for each of the combinations of two bands configurable based on three or four bands, the UE may report whether concurrent transmission is possible through the UE capability, or the BS may configure whether concurrent transmission is possible.

■ For example,

♦ When four UL bands A, B, C, and D are configured for UL Tx switching, concurrent transmission between specific bands (e.g., band A and band C) may be configured not to be allowed.

- In this case, the UE may report a case in which concurrent transmission is limited through the UE capability. The UE may be configured via RRC for a case in which such concurrent transmission is limited. RRC configuration and/or UE capability reporting may be performed in units of band combinations or in units of band pairs.
- A default value (i.e., concurrent transmission case that is not allowed prior to RRC configuration or when RRC configuration is not performed) may be determined.

   ♦ For example, concurrent UL transmission may be allowed in a specific band/carrier to be configured in the UE prior to separate RRC configuration or when RRC configuration is not performed.

      • In this case, the specific band/carrier may be all bands/carriers configured in the UE for UL Tx switching or may be predefined specific/partial bands/carriers.

[1-2] For a UE configured with UL Tx switching in 3 or 4 bands (and/or for a band (and/or a carrier within the corresponding band) and/or UL transmission (resource) for a CA configured in the UE), a separate UE capability and/or RRC configuration may be configured to allow concurrent UL transmission in a specific band combination or band pair for UL transmissions that trigger UL Tx switching.

- Method 1: Method of configuring the maximum or minimum number of concurrent UL transmission cases in which it is possible to trigger UL Tx switching or UL Tx switching is allowed.

   - For example,

      ♦ (Example 1) When a UL Tx switching operation is configured in three bands (e.g., band A, B, or C), the UE may report its capability to allow up to $Y\_1$ concurrent UL transmissions. A band combination may also be configured to allow up to $Y\_1$ concurrent UL transmissions by a BS.
      ♦ (Example 2) When a UL Tx switching operation is configured in three bands (e.g., band A, B, C, or D), the UE may report its capability to allow up to $Y\_2$ concurrent UL transmissions. A band combination may also be configured to allow up to $Y\_2$ concurrent UL transmissions by a BS.

   - $Y\_1$ and/or $Y\_2$ values may be predefined or configured via RRC. The UE may report (preferred) $Y\_1$ and/or $Y\_2$ via UE capability. RRC configuration and/or UE capability reporting may be performed in units of band combinations or in units of band pairs.
   - A default value of $Y\_1$ and/or $Y\_2$ (i.e., a $Y\_1$ or $Y\_2$ value prior to RRC configuration or when RRC configuration is not performed) may be determined.

      ♦ For example, $Y\_1$ or $Y\_2$ may be determined as '0' for 3 or 4 bands.

         • In a situation in which no concurrent UL transmission case is allowed for UL Tx switching for a band and/or carrier and/or UL transmission resources within the band for CA configured for a UE or a specific cell without separate UE capability reporting and/or RRC configuration, concurrent UL transmission in a specific band combination or band pair may be allowed for UL transmission that triggers UL Tx switching through separate UE capability reporting and/or RRC configuration.

      ♦ As another example, for 3 or 4 bands, $Y\_1$ or $Y\_2$ may be determined as a value greater than '0' (e.g., 1).

         • For a band for CA and/or carriers and/or UL transmission (resource) within the corresponding band configured for the UE or a specific cell, a concurrent UL transmission case is allowed in specific (some) cases for UL Tx switching without separate UE capability reporting and/or RRC configuration. Concurrent UL transmission in specific band combinations or band pair may be additionally allowed, with respect to UL transmission that triggers UL Tx switching, via UE capability reporting and/or RRC configuration.

- Method 2: Method of allowing concurrent UL transmission case containing a specific UL signal or channel, in which it is possible to trigger UL Tx switching or UL Tx switching is allowed.

   - For example,

♦ (Example 1) If one or more of concurrent UL transmissions in two or more bands is a specific SRS, the UL transmission and/or the UL Tx switching resulting therefrom may be allowed. A specific SRS may be an SRS triggered by DCI format 1_1.

♦ (Example 2) If one or more of concurrent UL transmissions in two or more bands is a specific PUCCH, the UL transmission and/or the UL Tx switching resulting therefrom may be allowed. The specific PUCCH may be a PUCCH triggered by DCI 1_0 or DCI 1_1.

♦ (Example 3) If one or more of concurrent UL transmissions in two or more bands is a configured UL transmission configured via RRC, or the like, the UL transmission and/or the UL Tx switching resulting therefrom may be allowed.

♦ (Example 4) If one or more of concurrent UL transmissions in two or more bands is a UL transmission scheduled via one or more DCI, the UL transmission and/or the UL Tx switching resulting therefrom may be allowed.

♦ (Example 5) A concurrent UL transmission case in which only one Tx chain is switched due to concurrent UL transmission in two or more bands may be allowed. For example, if there is 1 Tx chain in each of band A and band B, and 1-port UL transmission is scheduled in one of bands A/B and 1 port in band C, concurrent UL transmission may be allowed because both Tx chains do not need to be switched.

As another example, if there is 2 Tx chain in band A, and 1-port UL transmission is scheduled in each of the corresponding A and another band C, concurrent UL transmission may be allowed because both Tx chains do not need to be switched.

The above concurrent UL transmission cases may always be allowed for all UEs. Alternatively, whether such concurrent UL transmission is possible may be defined/reported through a UE capability. Alternatively, whether or not such concurrent UL transmission is allowed may be configured by a BS.

- The UE may report a case in which concurrent transmission (including the above example) is allowed through the UE capability. The UE may be configured via RRC for a case in which concurrent transmission (including the above example) is allowed. RRC configuration and/or UE capability reporting may be performed in units of band combinations or in units of band pairs.
- A default value (i.e., case that allows concurrent transmission prior to RRC configuration or when RRC configuration is not performed) may be determined.

  ♦ For example, concurrent UL transmission may not be allowed for all types of UL signals/channels to be configured in the UE prior to separate RRC configuration or when RRC configuration is not performed.
  ♦ As another example, prior to separate RRC configuration or when RRC configuration is not performed, concurrent UL transmission may not be allowed for all types of UL signals/channels, except in a case in which up to one Tx chain is switched.

- Method 3: Method of allowing concurrent UL transmission in two or more bands when switching periods configured for the corresponding bands, in which UL Tx switching is triggered or UL Tx switching is allowed, are different

  - When switching periods configured for multiple bands for which concurrent UL transmission is configured/scheduled or reported by the UE are the same between the bands, concurrent transmission in two or more of the corresponding bands may be allowed.
  Alternatively, when a difference between switching periods configured for multiple bands for which concurrent UL transmission is configured/scheduled or reported by the UE is equal to or less than a predefined or configured specific threshold value, concurrent transmission in two or more of the corresponding bands may be allowed.
  - For example,

    ♦ When a switching period of 35 usec is reported and/or RRC-configured for bands A and B, and a switching period of 210 usec is reported and/or RRC-configured for bands C and D, concurrent transmission in bands A and B (or C and D) may be allowed.

  - In this case, the UE may report a case in which concurrent transmission is allowed depending on a switching period through the UE capability. The UE may be configured via RRC for a case in which concurrent transmission is allowed. RRC configuration and/or UE capability reporting may be performed in units of band combinations or in units of band pairs.
  - A default value (i.e., case that allows concurrent transmission prior to RRC configuration or when RRC configuration is not performed) may be determined.

- Method 4: Method of allowing concurrent UL transmission in two or more bands when the concurrent transmission option (i.e., 'switchedUL'/'dualUL') setting values, which trigger UL Tx switching or allow UL Tx switching, are the same

■ When the 'switchedUL'/'dualUL' values configured for multiple bands for which concurrent UL transmission is configured/scheduled or reported by the UE are the same between the bands, concurrent transmission in two or more of the bands may be allowed.
■ For example,

♦ When 'switchedUL' is reported and/or RRC-configured for bands A and B, and 'dualUL' is reported and/or RRC-configured for bands C and D, concurrent transmission in bands A and B (or C and D) may be allowed.

■ In this case, the UE may report cases in which concurrent transmission is allowed according to the 'switchedUL'/'dualUL' configuration value through the UE capability. The UE may be configured via RRC for a case in which such concurrent transmission is allowed. RRC configuration and/or UE capability reporting may be performed in units of band combinations or in units of band pairs.
■ A default value (i.e., case that allows concurrent transmission prior to RRC configuration or when RRC configuration is not performed) may be determined.

- Method 5: Method of allowing concurrent UL transmission in any specific band or concurrent UL transmission in bands containing any specific UL signal/channel, which may trigger UL Tx switching or may be allowed for UL Tx switching

■ In a band in which concurrent UL transmission is configured/scheduled, any specific concurrent transmission case in two or more bands may be allowed.

In other words, (generalizing) for each of the combinations of two bands configurable based on three or four bands, the UE may report whether concurrent transmission is allowed through the UE capability, or the BS may configure whether concurrent transmission is allowed.

■ For example,

♦ When four UL bands A, B, C, and D are configured for UL Tx switching, concurrent transmission between specific bands (e.g., band A and band B) may be configured to be allowed.

■ In this case, the UE may report a case in which concurrent transmission is allowed through the UE capability. The UE may be configured via RRC for a case in which such concurrent transmission is allowed. RRC configuration and/or UE capability reporting may be configured in units of band combinations or in units of band pairs.
■ A default value (i.e., case that allows concurrent transmission prior to RRC configuration or when RRC configuration is not performed) may be determined.

[1-3] For a UE configured with UL Tx switching in 3 or 4 bands (and/or for a band (and/or a carrier within the corresponding band) and/or UL transmission (resource) for a CA configured in the UE), only a limited number or limited (specific) cases of concurrent UL transmission case may be allowed for UL Tx switching without separate UE capability and/or RRC configuration. Concurrent UL transmission in specific band combinations or band pair may be configured to be additionally allowed or additionally limited, with respect to UL transmission that triggers UL Tx switching, via separate UE capability and/or RRC configuration.

- The "limited number or limited (specific) cases of concurrent UL transmission case" expressed above may be predetermined.

■ For example, when 4 bands are configured for UL Tx switching, a maximum of 1 concurrent UL transmission may be allowed. In this case, one additional concurrent UL transmission case may be reported (or configured) via separate UE capability and/or RRC configuration.
■ As another example, when 4 bands are configured for UL Tx switching, concurrent transmission of UL transmission in 1 band scheduled via DCI and 1 configured UL transmission configured via RRC may be allowed (the two UL transmissions are performed in different bands). Concurrent transmission in different UL bands may not be allowed. In this case, additionally configured UL transmissions in two different bands may be reported (or configured) via separate UE capabilities and/or RRC configuration.

- Concurrent UL transmission corresponding to the above expressed "configuring to additionally allow or additionally limit concurrent UL transmission in a specific band combination or band pair for UL transmissions triggering UL Tx switching through separate UE capabilities and/or RRC configuration" may be predetermined (via the [1-1] or [1-2] method described above) or may be configured via RRC, or the like.

[1-4] For a UE configured for UL Tx switching in 3 or 4 bands, concurrent transmission options (i.e., switchedUL/dualUL) are reported for each band combination, and additional possible concurrent transmission case or additional limits may be configured through RRC configuration (+ separate UE capability).

- For example,

  ▪ (Example 1) Concurrent UL transmission in two bands with different concurrent transmission cases is not allowed.
  ▪ (Example 2) Under a certain condition, 'switchedUL' may be via RRC for a band reported (and RRC-configured) as 'dualUL'.

    ♦ In this case, the "specific condition' may be a case in which the number of band combinations reported as 'dualUL' is a certain number or more. Alternatively, a BS may arbitrarily configure a certain condition without any special condition.

[1-5] For a UE configured with UL Tx switching in 3 or 4 bands, concurrent UL transmission may be defined/-configured not to be allowed for a band in which 2-port UL transmission is allowed or a band pair/band combination including the corresponding band. Alternatively, conversely, 2-port UL transmission may be defined/configured to be allowed over bands belonging to a band pair or band combination in which concurrent UL transmission is not allowed. In this case, determination of the band or band combination in which 2-port UL transmission is allowed may comply with the proposed method of [2] described below. A method to configuring concurrent UL transmission to be allowed in the corresponding band or band combination may comply with the proposed method in [1].

[1-6] For a UE configured with UL Tx switching in 3 or 4 bands, concurrent UL transmission may be defined/-configured to be allowed for a band, a band pair, or a band combination in which 2-port UL transmission is not allowed. Alternatively, conversely, 2-port UL transmission may be defined/configured not to be allowed over bands belonging to a band pair or band combination in which concurrent UL transmission is allowed. In this case, determination of a band or band combination in which 2-port UL transmission is not allowed may comply with the proposed method of [2] described below, and the method of allowing concurrent UL transmission in the corresponding band or band combination may comply with the proposed method of [1].

[1-7] For a UE configured with UL Tx switching in 3 or 4 bands, concurrent UL transmission may be defined/-configured not to be allowed for a band in which 2-port UL transmission is allowed or a band pair or band combination including the corresponding band. Alternatively, conversely, 2-port UL transmission may be defined/configured to be allowed over bands belonging to a band pair or band combination in which concurrent UL transmission is allowed. In this case, determination of a band or band combination in which 2-port UL transmission is allowed may comply with the proposed method of [2] described below, and the method of allowing concurrent UL transmission in the corresponding band or band combination may comply with the proposed method of [1].

- In this case, the UE may report whether concurrent UL transmission and/or 2-port UL transmission through the UE capability are present. The UE may be configured via RRC to enable concurrent UL transmission and/or 2-port UL transmission. RRC configuration and/or UE capability reporting may be configured in units of band combinations or in units of band pairs.

[1-8] For a UE configured with UL Tx switching in 3 or 4 bands, concurrent UL transmission may be defined/-configured not to be allowed for a band, a band pair, or a band combination in which 2-port UL transmission is not allowed. Alternatively, conversely, 2-port UL transmission may be defined/configured not to be allowed over bands belonging to a band pair or band combination in which concurrent UL transmission is not allowed. In this case, determination of a band or band combination in which 2-port UL transmission is not allowed may comply with the proposed method of [2] described below, and the method of not allowing concurrent UL transmission in the corresponding band or band combination may comply with the proposed method of [1].

- In this case, the UE may report whether concurrent UL transmission and/or 2-port UL transmission through the UE capability are present. The UE may be configured via RRC to enable concurrent UL transmission and/or 2-port UL transmission. RRC configuration and/or UE capability reporting may be configured in units of band combinations or in units of band pairs.

[1-9] When two bands or cells or carriers of a specific band pair belong to different timing advanced groups (TAGs), concurrent UL transmission may not be permitted for the corresponding band pair or for all band pairs within the band combination to which the band pair belongs. The UE may report this allowance to the BS through the UE capabilities. The BS may configure/instruct the UE whether or not to allow this through RRC, or the like.

[1-10] When a Tx chain is switched due to UL Tx switching, if a band or band pair to which the Tx chain is connected before the UL Tx switching and the band or band pair to which the Tx chain is connected after the UL Tx switching belong to different TAGs, UL Tx switching may not be allowed for the band or band pair or the band combination to which the band/band pair belongs. The UE may report this allowance to the BS through the UE capabilities. The BS may configure/instruct the UE whether or not to allow this through RRC, or the like.

[1-11] A band and/or a carrier and/or UL transmission (resource) within the band for a UE configured with UL Tx switching in 3 or 4 bands and/or a CA configured in the UE may be configured to allow concurrent UL transmission in a specific band combination or band pair, for a UL transmission that triggers UL Tx switching, through a separate UE capability and/or RRC configuration.

**[2] Method of configuring 2-port UL transmission to be allowed for a limited number of bands**

[2-1] For a band and/or a carrier and/or UL transmission (resource) within the band for a UE configured with UL Tx switching in 3 or 4 bands and/or a CA configured in the UE, 2-port UL transmission in a specific band or a pair of bands or a combination of bands may be configured to be limited, through a separate UE capability and/or RRC configuration.

- Method 1: Method of limiting 2-port UL transmission in a specific number of bands or band pairs or band combinations from among configured bands that trigger UL Tx switching or are allowed for UL Tx switching.

  - For example,

    ♦ (Example 1) The UE may report its capability to enable 2-port UL transmission only in a maximum of $Z\_1$ bands, band pairs, or band combinations from among the 3 or 4 bands configured in the UE. The BS may also configure $Z\_1$.

  - The $Z\_1$ value may be predefined or configured via RRC. The UE may report (preferred) $Z\_1$ via UE capability. RRC configuration and/or UE capability may be performed in units of band combinations or in units of band pairs.
  - A default value of $Z\_1$ (i.e., a $Z\_1$ value prior to RRC configuration or when RRC configuration is not performed) may be determined.

    ♦ For example, $Z\_1$ may be determined as "3" for 3 bands, or $Z\_1$ may be determined as '4' for 4 bands.

      • In a situation in which 2-port UL transmission is allowed in all bands/carriers configured for UL Tx switching, for a band configured for CA in a UE or a specific cell and/or a carrier within the corresponding band and/or UL transmission (resource), without separate UE capability reporting and/or RRC configuration, 2-port UL transmission in a specific band or band pair or band combination may be limited for UL transmission that triggers UL Tx switching through separate UE capability reporting and/or RRC configuration.

    ♦ As another example, $Z\_1$ may be determined as a smaller value than 3 for 3 bands, or $Z\_1$ may be determined as a smaller value than 4 for 4 bands.

      • In a situation in which 2-port UL transmission is allowed in specific/some bands/carriers configured for UL Tx switching, for a band configured for CA in a UE or a specific cell and/or a carrier within the corresponding band and/or UL transmission (resource), without separate UE capability reporting and/or RRC configuration, 2-port UL transmission in a specific band or band pair or band combination may be additionally limited for UL transmission that triggers UL Tx switching through separate UE capability reporting and/or RRC configuration.

- Method 2: Method of limiting specific 2 UL signals or UL channels from among UL transmission and/or UL transmission bands that trigger UL Tx switching or are allowed for UL Tx switching.

■ For example,

♦ (Example 1) If 2-port UL transmission scheduled via DCI or configured via RRC, or the like is a specific SRS, UL Tx switching in the band/carrier in which the UL transmission is scheduled/configured may not be allowed. A specific SRS may be an SRS triggered by DCI format 1_1.

♦ (Example 2) If 2-port UL transmission scheduled via DCI or configured via RRC, or the like is a specific PUCCH, UL Tx switching in the band/carrier in which the UL transmission is scheduled/configured may not be allowed. The specific PUCCH may be a PUCCH triggered by DCI 1_0 or DCI 1_1.

♦ (Example 3) If the configured UL transmission configured via RRC, or the like is 2-port UL transmission, the UL transmission and/or the UL Tx switching resulting therefrom may not be allowed.

♦ (Example 4) If UL transmission scheduled via DCI is 2-port UL transmission, the UL transmission and/or the UL Tx switching resulting therefrom may not be allowed.

♦ (Example 5) Cases in which both Tx chains need to be switched due to 2-port UL transmission scheduled via DCI or configured via RRC, or the like may not be allowed. For example, if there is 1 Tx chain in band A and 1 Tx chain in band B, and 2-port UL transmission is scheduled/configured in band C, both Tx chains need to be switched from bands A and B to band C. In such cases, the corresponding 2-port UL transmission may not be allowed.

As another example, if there is 2 Tx chain in band A, and 2-port UL transmission in band C is scheduled/configured, both two Tx chains need to be switched from band A to band C. In such cases, the corresponding 2-port UL transmission may not be allowed.

The above 2-port UL transmission case may not always be allowed for all UEs. Alternatively, whether such 2-port UL transmission is possible may be defined/reported through a UE capability. Alternatively, whether or not such 2-port UL transmission is allowed may be configured by a BS.

■ In this case, the UE may report a band or band pair or band combination in which 2-port UL transmission (including the above example) is limited through the UE capability. The UE may be configured with a band or band pair or band combination in which 2-port UL transmission (including the above example) is limited via RRC. RRC configuration and/or UE capability reporting may be performed in units of band combinations or in units of band pairs.

■ A default value (i.e., 2-port transmission case that is not allowed prior to RRC configuration or when RRC configuration is not performed) may be determined.

♦ For example, 2-port UL transmission may be allowed in all bands/carriers configured in the UE prior to separate RRC configuration or when RRC configuration is not performed.

♦ As another example, 2-port UL transmission scheduled via DCI may be allowed in all bands/carriers configured in the UE prior to separate RRC configuration or when RRC configuration is not performed.

♦ As another example, 2-port UL transmission configured via RRC may be allowed in all bands/carriers configured in the UE prior to separate RRC configuration or when RRC configuration is not performed.

-    Method 3: Method of limiting UL transmission and/or 2-port UL transmission in any specific number of bands or band pairs or band combinations from among UL bands, which trigger UL Tx switching or are allowed for UL Tx switching.

■ Specific bands or band pairs or band combinations that do not allow 2-port UL transmission may be configured via RRC.

■ For example,

♦ When four UL bands A, B, C, and D are configured for UL Tx switching, 2-port UL transmission may be configured not to be allowed in specific band A and band C.

■ In this case, the UE may report a band in which 2-port transmission is limited through the UE capability. The UE may be configured via RRC for a band in which 2-port transmission is limited. RRC configuration and/or UE capability reporting may be performed in units of band combinations or in units of band pairs.

■ A default value (i.e., band that is not allowed prior to RRC configuration or when RRC configuration is not performed) may be determined.

♦ For example, 2-port UL transmission may be allowed in a specific band/carrier to be configured in the UE prior to separate RRC configuration or when RRC configuration is not performed.

• In this case, the specific band/carrier may be all bands/carriers configured in the UE for UL Tx switching or may be predefined specific/partial bands/carriers.

[2-2] For a band and/or a carrier and/or UL transmission (resource) within the band for a UE configured with UL Tx switching in 3 or 4 bands and/or a CA configured in the UE, 2-port UL transmission in a specific band or a pair of bands or a combination of bands may be configured to be allowed, through a separate UE capability and/or RRC configuration.

- Method 1: Method of allowing 2-port UL transmission only in a specific number of bands or band pairs or band combinations from among configured bands that trigger UL Tx switching or are allowed for UL Tx switching.

  ■ For example,

    ♦ (Example 1) The UE may report its capability to enable 2-port UL transmission in a maximum of $Z_2$ bands, band pairs, or band combinations from among the 3 or 4 bands configured in the UE. The BS may also configure $Z_2$.

    ■ The $Z_2$ value may be predefined or configured via RRC. The UE may report (preferred) $Z_2$ via UE capability. RRC configuration and/or UE capability reporting may be performed in units of band combinations or in units of band pairs.
    ■ A default value of $Z_2$ (i.e., a $Z_2$ value prior to RRC configuration or when RRC configuration is not performed) may be determined.

      ♦ For example, $Z_2$ may be determined as '0' for 3 or 4 bands.

        • In a situation in which 2-port UL transmission is not allowed in all bands/carriers configured for UL Tx switching, for a band configured for CA in a UE or a specific cell and/or a carrier within the corresponding band and/or UL transmission (resource), without separate UE capability and/or RRC configuration, 2-port UL transmission in a specific band or band pair or band combination may be allowed for UL transmission that triggers UL Tx switching through separate UE capability reporting and/or RRC configuration.

      ♦ As another example, $Z_2$ may be determined as a greater value than '0' for 3 or 4 bands.

        • In a situation in which 2-port UL transmission is allowed only in specific/some bands/carriers configured for UL Tx switching, for a band configured for CA in a UE or a specific cell and/or a carrier within the corresponding band and/or UL transmission (resource), without separate UE capability reporting and/or RRC configuration, 2-port UL transmission in a specific band or band pair or band combination may be additionally allowed for UL transmission that triggers UL Tx switching through separate UE capability reporting and/or RRC configuration.

- Method 2: Method of configuring a specific 2-port UL signal or UL channel to be allowed, in which it is possible to trigger UL Tx switching or UL Tx switching is allowed.

  ■ For example,

    ♦ (Example 1) If UL transmission scheduled via DCI or configured via RRC, or the like is a specific SRS transmitted with 2 port, UL Tx switching in the band/carrier in which the UL transmission is scheduled/configured may be allowed. Specific SRS transmission may be 2-port SRS transmission triggered by DCI format 1_1.
    ♦ (Example 2) If UL transmission scheduled via DCI or configured via RRC, or the like is a specific PUCCH transmitted with 2 port, UL Tx switching in the band/carrier in which the UL transmission is scheduled/configured may be allowed. The specific PUCCH may be a PUCCH triggered by DCI 1_0 or DCI 1_1.
    ♦ (Example 3) If the configured UL transmission configured via RRC, or the like is 2-port UL transmission, the UL transmission and/or the UL Tx switching resulting therefrom may be allowed.
    ♦ (Example 4) If UL transmission scheduled via DCI is 2-port UL transmission, the UL transmission and/or the UL Tx switching resulting therefrom may be allowed.
    ♦ (Example 5) Cases in which only the maximum of one Tx chain needs to be switched due to 2-port UL transmission scheduled via DCI or configured via RRC, or the like may be allowed. For example, if there is 1 Tx chain in bandA and 1 Tx chain in band B, and a 2-port UL transmission is scheduled in band B, the 2-port UL transmission may be allowed because only 1 Tx chain is switched. On the other hand, if 2-port UL transmission is scheduled in band C while there is 1 Tx chain in band A and 1 Tx chain in band B, 2-port UL transmission may not be allowed because both Tx chains from each of bands A and B need to be switched to band C.

- In this case, the UE may report a band or band pair or band combination in which 2-port UL transmission (including the above example) is allowed through the UE capability. The UE may be configured with a band or band pair or band combination in which 2-port UL transmission (including the above example) is allowed via RRC. RRC configuration and/or UE capability reporting may be performed in units of band combinations or in units of band pairs.
- A default value (i.e., 2-port transmission case or band that is allowed prior to RRC configuration or when RRC configuration is not performed) may be determined.

    ♦ For example, 2-port UL transmission may not be allowed in all bands/carriers configured in the UE prior to separate RRC configuration or when RRC configuration is not performed.
    ♦ As another example, 2-port UL transmission scheduled via DCI may not be allowed in all bands/carriers configured in the UE prior to separate RRC configuration or when RRC configuration is not performed.
    ♦ As another example, 2-port UL transmission configured via RRC may not be allowed in all bands/carriers configured in the UE prior to separate RRC configuration or when RRC configuration is not performed.

- Method 3: Method of configuring 2-port UL transmission to be allowed in any specific band or band pair or band combination

    - Specific bands or band pairs or band combinations that allow 2-port UL transmission may be configured via RRC.
    - For example,

        ♦ When four UL bands A, B, C, and D are configured for UL Tx switching, a specific band A (or band A and band B) may be configured to allow 2-port UL transmission.

    - In this case, the UE may report a band in which 2-port transmission is allowed through the UE capability. The UE may be configured for these bands via RRC. RRC configuration and/or UE capability reporting may be performed in units of band combinations or in units of band pairs.
    - A default value (i.e., band in which 2-port transmission is allowed prior to RRC configuration or when RRC configuration is not performed) may be determined.

        ♦ For example, 2-port UL transmission may not be allowed in a specific band/carrier to be configured in the UE prior to separate RRC configuration or when RRC configuration is not performed.

            • In this case, the specific band/carrier may be all bands/carriers configured in the UE for UL Tx switching or may be predefined specific/partial bands/carriers.

[2-2] For a band and/or a carrier and/or UL transmission (resource) within the band for a UE configured with UL Tx switching in 3 or 4 bands and/or a CA configured in the UE, 2-port UL transmission in a specific band or a pair of bands or a combination of bands may be configured to be allowed, through a separate UE capability and/or RRC configuration.

- Method 1: Method of allowing 2-port UL transmission (only) in a specific number of bands or band pairs or band combinations from among configured bands that trigger UL Tx switching or are allowed for UL Tx switching.

    - For example,

        ♦ (Example 1) The UE may report its capability to enable 2-port UL transmission in a maximum of $Z\_2$ bands, band pairs, or band combinations from among the 3 or 4 bands configured in the UE. Z-2 may also be configured by the BS.

    - The $Z\_2$ value may be predefined or configured via RRC. The UE may report (preferred) $Z\_2$ via UE capability. RRC configuration and/or UE capability reporting may be performed in units of band combinations or in units of band pairs.

▪ A default value of Z_2 (i.e., a Z_2 value prior to RRC configuration or when RRC configuration is not performed) may be determined.

♦ For example, Z_2 may be determined as '0' for 3 or 4 bands.

• In a situation in which 2-port UL transmission is not allowed in all bands/carriers configured for UL Tx switching, for a band configured for CA in a UE or a specific cell and/or a carrier within the corresponding band and/or UL transmission (resource), without separate UE capability and/or RRC configuration, 2-port UL transmission in a specific band or band pair or band combination may be allowed for UL transmission that triggers UL Tx switching through separate UE capability reporting and/or RRC configuration.

♦ As another example, Z_2 may be determined as a greater value than '0' (e.g., 1) for 3 or 4 bands.

• In a situation in which 2-port UL transmission is allowed only in specific/some bands/carriers configured for UL Tx switching, for a band configured for CA in a UE or a specific cell and/or a carrier within the corresponding band and/or UL transmission (resource), without separate UE capability reporting and/or RRC configuration, 2-port UL transmission in a specific band or band pair or band combination may be additionally allowed for UL transmission that triggers UL Tx switching through separate UE capability reporting and/or RRC configuration.

- Method 2: Method of configuring a specific 2-port UL signal or UL channel to be allowed, in which it is possible to trigger UL Tx switching or UL Tx switching is allowed.

▪ For example,

♦ (Example 1) If UL transmission scheduled via DCI or configured via RRC, or the like is a specific SRS transmitted with 2 port, UL Tx switching in the band/carrier in which the UL transmission is scheduled/configured may be allowed. Specific SRS transmission may be 2-port SRS transmission triggered by DCI format 1_1.

♦ (Example 2) If UL transmission scheduled via DCI or configured via RRC, or the like is a specific PUCCH transmitted with 2 port, UL Tx switching in the band/carrier in which the UL transmission is scheduled/configured may be allowed. The specific PUCCH may be a PUCCH triggered by DCI 1_0 or DCI 1_1.

♦ (Example 3) If the configured UL transmission configured via RRC, or the like is 2-port UL transmission, the UL transmission and/or the UL Tx switching resulting therefrom may be allowed.

♦ (Example 4) If UL transmission scheduled via DCI is 2-port UL transmission, the UL transmission and/or the UL Tx switching resulting therefrom may be allowed.

♦ (Example 5) Cases in which only the maximum of one Tx chain needs to be switched due to 2-port UL transmission scheduled via DCI or configured via RRC, or the like may be allowed. For example, if there is 1 Tx chain in band A and 1 Tx chain in band B, and a 2-port UL transmission is scheduled in band B, the 2-port UL transmission may be allowed because only 1 Tx chain is switched. On the other hand, if 2-port UL transmission is scheduled in band C while there is 1 Tx chain in band A and 1 Tx chain in band B, 2-port UL transmission may not be allowed because both Tx chains from each of bands A and B need to be switched to band C.

▪ In this case, the UE may report a band or band pair or band combination in which 2-port UL transmission (including the above example) is allowed through the UE capability, and may also be configured for the band or band pair or band combination in which 2-port UL transmission (including the above example) is allowed through RRC. RRC configuration and/or UE capability may be performed in units of band combinations or in units of band pairs.

▪ A default value (i.e., 2-port transmission case (or band) that is allowed prior to RRC configuration or when RRC configuration is not performed) may be determined.

♦ For example, 2-port UL transmission may not be allowed in all bands/carriers configured in the UE prior to separate RRC configuration or when RRC configuration is not performed.

♦ As another example, 2-port UL transmission scheduled via DCI may not be allowed in all bands/carriers configured in the UE prior to separate RRC configuration or when RRC configuration is not performed.

♦ As another example, 2-port UL transmission configured via RRC may not be allowed in all bands/carriers configured in the UE prior to separate RRC configuration or when RRC configuration is not performed.

- Method 3: Method of configuring 2-port UL transmission to be allowed in any specific band or band pair or band combination

    ▪ Specific bands or band pairs or band combinations that allow 2-port UL transmission may be configured via RRC.
    ▪ For example,

        ♦ When four UL bands A, B, C, and D are configured for UL Tx switching, a specific band A (or band A and band B) may allow 2-port UL transmission.

    ▪ In this case, the UE may report a band in which 2-port transmission is allowed through the UE capability. The UE may be configured for these bands via RRC. RRC configuration and/or UE capability reporting may be performed in units of band combinations or in units of band pairs.
    ▪ A default value (i.e., band in which 2-port transmission is allowed prior to RRC configuration or when RRC configuration is not performed) may be determined.

        ♦ For example, 2-port UL transmission may not be allowed in a specific band/carrier to be configured in the UE prior to separate RRC configuration or when RRC configuration is not performed.

            • In this case, the specific band/carrier may be all bands/carriers configured in the UE for UL Tx switching or may be predefined specific/partial bands/carriers.

[2-3] For a UE configured with UL Tx switching in 3 or 4 bands and/or for a band for a CA configured in the UE and/or for a carrier within the corresponding band and/or UL transmission (resource), when 2-port UL transmission cases for a limited number or limited (specific) cases are allowed for UL Tx switching without separate UE capability reporting and/or RRC configuration, 2-port UL transmission in a specific band combination or band pair may be additionally allowed or additionally limited for UL transmission triggering UL Tx switching through separate UE capability reporting and/or RRC configuration.

- The "limited number or limited (specific) cases of 2-port UL transmission case" expressed above may be predetermined.

    ▪ For example, when 4 bands are configured for UL Tx switching, 2-port UL transmission in a maximum of 1 band may be allowed. In this case, additionally (for example) 2-port UL transmission on another band may be reported or configured via separate UE capability reporting and/or RRC configuration as proposed. As a result, in this case, 2-port UL transmission is allowed in a total of 2 bands.

- 2-port UL transmission corresponding to the above expression "2-port UL transmission in specific band combinations or band pairs may be additionally allowed or additionally limited for UL transmissions triggering UL Tx switching through separate UE capability reporting and/or RRC configuration" may be predetermined (via the [2-1] or [2-2] method described above) or configured via RRC, or the like.

[2-4] For UEs with UL Tx switching configured in 3 or 4 bands, the possibility of 2-port UL transmission is reported for each band combination. Additional bands, band pairs, or band combinations that enable or disable 2-port UL transmission may be configured via RRC configuration (and separate UE capability reporting).

[2-5] For a UE configured with UL Tx switching in 3 or 4 bands, a band or band pair or band combination in which concurrent UL transmission is allowed may be defined/configured such that 2-port UL transmission through a band belonging to the corresponding band pair or band combination is not allowed. In this case, determination of a band or band combination in which concurrent UL transmission is allowed may comply with the proposed method of [1] described below, and the method of configuring not to allow 2-port UL transmission in the corresponding band or band combination may comply with the proposed method of [2].

[2-6] For a UE configured with UL Tx switching in 3 or 4 bands, a band or band pair or band combination in which concurrent UL transmission is not allowed may be defined/configured such that 2-port UL transmission through a band belonging to the corresponding band pair or band combination is allowed. In this case, determination of a band or band combination in which concurrent UL transmission is not allowed may comply with the proposed method of [1] described below, and the method of configuring to allow 2-port UL transmission in the corresponding band or band combination may comply with the proposed method of [2].

[2-7] For a UE configured with UL Tx switching in 3 or 4 bands, a band or band pair or band combination in which concurrent UL transmission is allowed may be defined/configured such that 2-port UL transmission through a band belonging to the corresponding band pair or band combination is allowed. In this case, determination of a band or band combination in which concurrent UL transmission is allowed may comply with the proposed method of [1] described below, and the method of configuring to allow 2-port UL transmission in the corresponding band or band combination may comply with the proposed method of [2].

- In this case, the UE may report whether concurrent UL transmission and/or 2-port UL transmission through the UE capability are present. The UE may be configured via RRC to enable concurrent UL transmission and/or 2-port UL transmission. RRC configuration and/or UE capability reporting may be performed in units of band combinations or in units of band pairs.

[2-8] For a UE configured with UL Tx switching in 3 or 4 bands, a band or band pair or band combination in which concurrent UL transmission is not allowed may be defined/configured such that 2-port UL transmission through a band belonging to the corresponding band pair or band combination is not allowed. In this case, determination of a band or band combination in which concurrent UL transmission is not allowed may comply with the proposed method of [1] described below, and the method of configuring not to allow 2-port UL transmission in the corresponding band or band combination may comply with the proposed method of [2].

- In this case, the UE may report whether concurrent UL transmission and/or 2-port UL transmission through the UE capability are present. The UE may be configured via RRC to enable concurrent UL transmission and/or 2-port UL transmission. RRC configuration and/or UE capability reporting may be performed in units of band combinations or in units of band pairs.

[2-9] When two bands or cells or carriers of a specific band pair belong to different timing advanced groups (TAGs), 2-port UL transmission for a band belonging to the band pair or a band belonging to the corresponding band pair may be allowed or may not be allowed. The UE may report this allowance to the BS through the UE capabilities. The BS may configure/instruct the UE whether or not to allow this through RRC, or the like.

[2-10] When a Tx chain is switched due to Tx switching, if a band or band pair to which the Tx chain is connected before the Tx switching and the band or band pair to which the Tx chain is connected after the Tx switching belong to different TAGs, Tx switching may not be allowed for the band or band pair or the band combination to which the band/band pair belongs. The UE may report this allowance to the BS through the UE capabilities. The BS may configure/instruct the UE whether or not to allow this through RRC, or the like.

[2-11] A band and/or a carrier and/or UL transmission (resource) within the band for a UE configured with UL Tx switching in 3 or 4 bands and/or a CA configured in the UE may be configured to allow or not to allow 2-port UL transmission in a specific band or a band pair, for a UL transmission that triggers UL Tx switching, through a separate UE capability and/or RRC configuration.

**[3] Method of limiting UL transmission and/or Tx switching cases depending on the number of bands or band pairs related to Tx switching**

In the method described below, the meaning of not allowing Tx switching may be understood to mean not performing UL transmission that triggers the Tx switching. For example, this may mean disregarding or dropping a UL grant that schedules the corresponding UL transmission, or skipping the UL transmission by higher layer signaling/configuration.

[3-1] A UE configured for UL Tx switching in 3 or 4 bands may be defined/configured not to allow Tx switching if the number of bands or band pairs related to Tx switching is equal to or exceeds a certain threshold.

- In this case, the "number of bands or band pairs related to Tx switching" may mean the number of bands or band pairs related after switching when the Tx chain is switched through Tx switching. For example, when 1 Tx chain is connected to band A and band B, and 1 Tx chain is switched to band C and band D respectively by UL transmission scheduling, the number of bands related to the Tx switching may be 2, and the number of band pairs may be 1.
- Alternatively, the "number of bands or band pairs related to Tx switching" may mean the number of bands or band pairs related before and after switching when the Tx chain is switched through Tx switching. For example, when 1 Tx chain is connected to band A and band B, and 1 Tx chain is switched to band C and band D respectively by UL transmission scheduling, the number of bands related to the Tx switching may be 2, and the number of band pairs may be 1.

[3-2] In the above [3-1], a specific threshold value may be predefined or configured via RRC, or the like. Alternatively, the specific threshold may be reported through a UE capability. If RRC configuration is not performed or before RRC configuration is performed or if UE capability reporting is not performed or before UE capability reporting is performed, all Tx switching cases/patterns are allowed regardless of the number of related bands or band pairs. In this case, the threshold value may be understood to mean the number of bands or band pairs configured in the UE for CA or UL Tx switching.

[3-3] A UE configured for UL Tx switching in 3 or 4 bands may be defined/configured not to allow the corresponding Tx switching case/pattern if the number of bands or band pairs related to specific Tx switching case/pattern is equal to or exceeds a certain threshold.

- In this case, the "number of bands or band pairs related to specific Tx switching case/pattern" may mean the number of bands or band pairs related after switching when the Tx chain is switched through Tx switching case/pattern. For example, when 1 Tx chain is connected to band A and band B, and 1 Tx chain is switched to band C and band D respectively by UL transmission scheduling, the number of bands related to the Tx switching case/pattern may be 2, and the number of band pairs may be 1.
- Alternatively, the "number of bands or band pairs related to specific Tx switching case/pattern" may mean the number of bands or band pairs related before and after switching when the Tx chain is switched through Tx switching case/pattern. For example, when 1 Tx chain is connected to band A and band B, and 1 Tx chain is switched to band C and band D respectively by UL transmission scheduling, the number of bands related to the Tx switching case/pattern may be 4, and the number of band pairs may be 2.

To elaborate, [3-3] may be distinguished from [3-1] in that it may be applied only to some cases/patterns from among Tx switching cases/patterns related to the same number of bands or band pairs. For example, the [3-3] method may be applied to only one of Case1 and Case2 below.

- Case 1: When 1 Tx chain is connected to band A and band B, 2 Tx chains are switched to band C by UL transmission scheduling.
- Case 2: When both Tx chains are connected to band A, 1 Tx chain is switched to band B and band C.

[3-4] In the above [3-3], a specific threshold value and/or a specific Tx switching case/pattern may be predefined or configured via RR, or the like. Alternatively, the specific threshold and/or specific Tx switching cases/patterns may be reported through a UE capability. If RRC configuration is not performed or before RRC configuration is performed or if UE capability reporting is not performed or before UE capability reporting is performed, all Tx switching cases/patterns are allowed. In this case, the threshold value may be understood to mean the number of bands or band pairs configured in the UE for CA or UL Tx switching.

[3-5] A UE configured for UL Tx switching in 3 or 4 bands may be defined/configured not to allow the corresponding specific Tx switching if the number of bands or band pairs related to specific Tx switching and Tx switching immediately before the corresponding Tx switching is equal to or exceeds a certain threshold.

- In this case, the "specific Tx switching and the Tx switching immediately before the Tx switching" means two consecutive Tx switching, i.e., first Tx switching (=immediately preceding Tx switching) and second Tx switching (=specific Tx switching).
- The "number of related bands or band pairs" may mean the number of bands or band pairs to which a Tx chain is connected or positioned after the second Tx switching.
- Alternatively, the "number of related bands or band pairs" may mean the number of bands or band pairs related before and after the second Tx switching.
- Alternatively, the "number of related bands or band pairs" may mean the sum of the number of bands or band pairs in which the Tx chain is located before and/or after the first Tx switching and the number of bands or band pairs in which the Tx chain is located before and/or after the second Tx switching.

[3-6] In the above [3-5], a specific threshold value may be predefined or configured via RRC, or the like. Alternatively, the specific threshold may be reported through a UE capability. If RRC configuration is not performed or before RRC configuration is performed or if UE capability reporting is not performed or before UE capability reporting is performed, all Tx switching cases/patterns are allowed. In this case, the threshold value may be understood to mean the number of bands or band pairs configured in the UE for CA or UL Tx switching.

[3-7] The above [3-5] may be applied only when an interval between the first Tx switching and the second Tx switching is equal to or less than a specific time interval. In this case, the specific time interval may be expressed in units of symbols, slots, or msec. The specific time interval may be predefined, configured via RRC, or the like, or reported through a UE capability.

[3-8] The method described above may be applied together with the Tx switching and related proposed methods described in [1], [2], [4]. For example, from among Tx switching cases in which both Tx chains are switched due to concurrent UL transmission, only Tx switching cases in which the number of bands or band pairs related to the Tx switching exceeds a certain threshold may be defined/configured not to be allowed.

## [4] Method of limiting UL transmission and/or Tx switching cases depending on bandwidth of bands or band pairs related to Tx switching

In the method described below, the meaning of not allowing Tx switching may be understood to mean not performing UL transmission that triggers the Tx switching. For example, this may mean disregarding or dropping a UL grant that schedules the corresponding UL transmission, or skipping a UL transmission that is configured by higher layer signaling/configuration.

[4-1] A UE configured for UL Tx switching in 3 or 4 bands may be defined/configured not to allow Tx switching if the total bandwidth of bands or band pairs related to Tx switching is equal to or exceeds a certain threshold.

- In this case, the "bands or band pairs related to Tx switching" may mean bands or band pairs related after switching when the Tx chain is switched through Tx switching. For example, when 1 Tx chain is connected to band A and band B, and 1 Tx chain is switched to band C and band D respectively by UL transmission scheduling, bands related to the corresponding Tx switching may be band C and band D. In this case, the total bandwidth may mean the sum of the bandwidth of band C and the bandwidth of band D.

- Alternatively, the "bands or band pairs related to Tx switching" may mean bands or band pairs related before and after switching when the Tx chain is switched through Tx switching. For example, when 1 Tx chain is connected to band A and band B, and 1 Tx chain is switched to band C and band D respectively by UL transmission scheduling, bands related to the corresponding Tx switching may be band A, B, C, or D. In this case, the total bandwidth may mean the sum of the bandwidths configured for each band.

[4-2] In the above [4-1], a specific threshold value may be predefined or configured via RRC, or the like. Alternatively, the specific threshold may be reported through a UE capability. If RRC configuration is not performed or before RRC configuration is performed or if UE capability reporting is not performed or before UE capability reporting is performed, all Tx switching cases/patterns are allowed regardless of a bandwidth of related bands or band pairs. In this case, the threshold value may be understood to mean the sum of bandwidths configured for all bands or band pairs configured in the UE for CA or UL Tx switching.

[4-3] A UE configured for UL Tx switching in 3 or 4 bands may be defined/configured not to allow the corresponding Tx switching case/pattern if the total bandwidth of bands or band pairs related to specific Tx switching case/pattern is equal to or exceeds a certain threshold.

- In this case, the "bands or band pairs related to specific Tx switching case/pattern" may mean bands or band pairs related after switching when the Tx chain is switched through Tx switching case/pattern. For example, when 1 Tx chain is connected to band A and band B, and 1 Tx chain is switched to band C and band D respectively by UL transmission scheduling, bands related to the corresponding Tx switching case/pattern may be band C and band D. In this case, the total bandwidth may mean the sum of the bandwidth of band C and the bandwidth of band D.

- Alternatively, the "bands or band pairs related to specific Tx switching case/pattern" may mean bands or band pairs related before and after switching when the Tx chain is switched through Tx switching. For example, when 1 Tx chain is connected to band A and band B, and 1 Tx chain is switched to band C and band D respectively by UL transmission scheduling, bands related to the corresponding Tx switching case/pattern may be band A, B, C, or D. In this case, the total bandwidth may mean the sum of the bandwidths configured for each band.

To elaborate, [4-3] may be distinguished from [4-1] in that it may be applied only to some cases/patterns from among Tx switching cases/patterns with the same total related bandwidth. For example, the [4-3] method may be applied to only one of Case1 and Case2 below.

- Case 1: When 1 Tx chain is connected to band A and band B, 2 Tx chains are switched to band C by UL transmission scheduling.
- Case 2: When both Tx chains are connected to band A, 1 Tx chain is switched to band B and band C.

[4-4] In the above [4-3], a specific threshold value and/or a specific Tx switching case/pattern may be predefined or configured via RR, or the like. Alternatively, the specific threshold and/or specific Tx switching cases/patterns may be reported through a UE capability. If RRC configuration is not performed or before RRC configuration is performed or if UE capability reporting is not performed or before UE capability reporting is performed, all Tx switching cases/patterns are allowed. In this case, the threshold value may be understood to mean the sum of bandwidths configured for all bands or band pairs configured in the UE for CA or UL Tx switching.

[4-5] A UE configured for UL Tx switching in 3 or 4 bands may be defined/configured not to allow the corresponding specific Tx switching if the total bandwidth of bands or band pairs related to specific Tx switching and Tx switching immediately before the corresponding Tx switching is equal to or exceeds a certain threshold.

- In this case, the "specific Tx switching and the Tx switching immediately before the Tx switching" means two consecutive Tx switching, i.e., first Tx switching (=immediately preceding Tx switching) and second Tx switching (=specific Tx switching).
- The "total bandwidth of related bands or band pairs" may mean the sum of bandwidths configured for bands or band pairs to which a Tx chain is connected or positioned after the second Tx switching.
- Alternatively, the "total bandwidth of related bands or band pairs" may mean the sum of bandwidths configured for related bands or band pairs before and after the second Tx switching.
- Alternatively, the "total bandwidth of related bands or band pairs" may mean the sum of the total bandwidths of bands or band pairs in which the Tx chain is located before and/or after the first Tx switching and the total bandwidths of bands or band pairs in which the Tx chain is located before and/or after the second Tx switching.

[4-6] In the above [4-5], a specific threshold value may be predefined or configured via RRC, or the like. Alternatively, the specific threshold may be reported through a UE capability. If RRC configuration is not performed or before RRC configuration is performed or if UE capability reporting is not performed or before UE capability reporting is performed, all Tx switching cases/patterns are allowed. In this case, the threshold value may be understood to mean the sum of bandwidths configured for all bands or band pairs configured in the UE for CA or UL Tx switching.

[4-7] The above [4-5] may be applied only when an interval between the first Tx switching and the second Tx switching is equal to or less than a specific time interval. In this case, the specific time interval may be expressed in units of symbols, slots, or msec. The specific time interval may be predefined, configured via RRC, or the like, or reported through a UE capability.

[4-8] The method described above may be applied together with the Tx switching case/pattern and related proposed methods described in [1], [2], [3]. For example, from among Tx switching cases in which both Tx chains are switched due to concurrent UL transmission, only Tx switching cases in which the total bandwidth of bands or band pairs related to the Tx switching exceeds a certain threshold may be defined/configured not to be allowed.

**[5] Method for reducing complexity of UE by limiting concurrent UL transmission and/or 2-port UL transmission and/or Tx switching case**

[5-1] As a method for reducing the complexity of a UE for UL Tx switching, the proposed methods described above may be applied alone or in a combination of two or more.

- Embodiment 1: For 3 or 4 bands configured for UL Tx switching, 2-port UL transmission is allowed on all bands and all concurrent UL transmission cases are allowed if there is no separate UE capability reporting and/or RRC configuration. Through separate UE capability reporting and/or RRC configuration, it may be reported and/or configured to allow 2-port UL transmission only in some bands. Through separate UE capability reporting and/or RRC configuration, it may be reported and/or configured to allow only some concurrent UL transmission case.
- Embodiment 2: For 3 or 4 bands configured for UL Tx switching, 2-port UL transmission is not allowed on all bands and all concurrent UL transmission cases are not allowed if there is no separate UE capability reporting and/or RRC configuration. Through separate UE capability reporting and/or RRC configuration, it may be configured to allow 2-port UL transmission in some bands. Through separate UE capability reporting and/or RRC configuration, it may be configured to allow some concurrent UL transmission case.
- Embodiment 3: For 3 or 4 bands configured for UL Tx switching, if there is no separate UE capability reporting and/or RRC configuration, concurrent UL transmission in a specific band pair may be allowed, and concurrent UL transmission in other band pairs may not be allowed. Through separate UE capability reporting and/or RRC configuration, it may be configured to allow concurrent UL transmission in the remaining band pairs.
- Embodiment 4: For 3 or 4 bands configured for UL Tx switching, if there is no separate UE capability reporting and/or RRC configuration, 2-port UL transmission in one specific band is allowed. Through separate UE capability reporting and/or RRC configuration, it may be configured to allow 2-port UL transmission in two or more bands.

[5-2] The proposed methods described above may be understood as a limiting method for a switching case of UL Tx switching. That is, the UL Tx switching cases expressed in Table 8 and/or Table 9 may be adjusted through the proposed method described above.

For example, if three bands are configured for UL Tx switching, the overall switching cases may be as in Table 8. However, if concurrent UL transmission in all bands is not allowed via separate RRC configuration as proposed above, the switching case may be changed as shown in Table 10.

[Table 10]

|  | Number of Tx Chains (Band A + Band B + Band C) | Number of antenna ports for UL transmission Band A(Carrier 1)+Band B(Carrier 2)+Band C(Carrier 3) |
|---|---|---|
| Case 4 | 2T+0T+0T | 2P+0P+0P, 1P+0P+0P |
| Case 5 | 0T+2T+0T | 0P+2P+0P, 0P+1P+0P |
| Case 6 | 0T+0T+2T | 0P+0P+2P, 0P+0P+1P |

Alternatively, if concurrent UL transmission is configured to be allowed only in a specific band pair through separate RRC configuration, the switching case in Table 8 may be changed as in Table 11. Here, a specific band pair is assumed to be a band pair {A,B}.

[Table 11]

|  | Number of Tx Chains (Band A + Band B + Band C) | Number of antenna ports for UL transmission Band A( Carrier 1) +Band B(Carrier 2)+Band C(Carrier 3) |
|---|---|---|
| Case 1 | 1T+1T+0T | 1P+1P+0P, 1P+0P+0P, 0P+1P+0P |
| Case 4 | 2T+0T+0T | 2P+0P+0P, 1P+0P+0P |
| Case 5 | 0T+2T+0T | 0P+2P+0P, 0P+1P+0P |
| Case 6 | 0T+0T+2T | 0P+0P+2P, 0P+0P+1P |

However, if 2-port UL transmission in all bands is configured not to be allowed via separate RRC configuration as proposed above, the switching case may be changed as shown in Table 12.

[Table 12]

|  | Number of Tx Chains (Band A + Band B + Band C) | Number of antenna ports for UL transmission Band A(Carrier 1) +Band B(Carrier 2)+Band C(Carrier 3) |
|---|---|---|
| Case 1 | 1T+1T+0T | 1P+1P+0P, 1P+0P+0P, 0P+1P+0P |
| Case 2 | 0T+1T+1T | 0P+1P+1P, 0P+1P+0P, 0P+0P+1P |
| Case 3 | 1T+0T+1T | 1P+0P+1P, 1P+0P+0P, 0P+0P+1P |

Altern0atively, if 2-port UL transmission is configured to be allowed only in a specific band through separate RRC configuration, the switching case in Table 8 may be changed as in Table 13. Here, a specific band is assumed to be a band C.

[Table 13]

|  | Number of Tx Chains (Band A + Band B + Band C) | Number of antenna ports for UL transmission Band A(Carrier 1) +Band B(Carrier 2)+Band C(Carrier 3) |
|---|---|---|
| Case 1 | 1T+1T+0T | 1P+1P+0P, 1P+0P+0P, 0P+1P+0P |
| Case 2 | 0T+1T+1T | 0P+1P+1P, 0P+1P+0P, 0P+0P+1P |
| Case 3 | 1T+0T+1T | 1P+0P+1P, 1P+0P+0P, 0P+0P+1P |
| Case 6 | 0T+0T+2T | 0P+0P+2P, 0P+0P+1P |

Alternatively, if only concurrent UL transmission in a specific band pair is configured to be allowed through separate RRC configuration and only 2-port UL transmission in a specific band is allowed, the switching case in Table 8 may be changed as in Table 14. Here, a specific one band pair is assumed as a band pair {A,B}, and a specific one band is assumed as band C.

[Table 14]

| | | Number of Tx Chains (Band A + Band B + Band C) | Number of antenna ports for UL transmission Band A(Carrier 1) +Band B(Carrier 2)+Band C(Carrier 3) |
|---|---|---|---|
| | Case 1 | 1T+1T+0T | 1P+1P+0P, 1P+0P+0P, 0P+1P+0P |
| | Case 6 | 0T+0T+2T | 0P+0P+2P, 0P+0P+1P |

[5-3] Even when four bands are configured for UL Tx switching, the Tx switching case may be changed to consider only some cases from among all switching cases shown in Table 9 through a combination of one or more of the proposed methods described above.

The contents of the present disclosure are not limited to transmission and reception of UL and/or DL signals. For example, the contents of the present disclosure may also be used in direct communication between UEs. A BS in the present disclosure may be a concept that includes not only a BS but also a relay node. For example, an operation of the BS in the present disclosure may be performed by the BS, but may also be performed by the relay node.

It is obvious that the examples of the proposed method described above may also be included as one of the implementation methods of the present disclosure, and thus may be considered as a kind of proposed method. The proposed methods described above may be implemented independently, but may also be implemented in the form of a combination (or merge) of some proposed methods. A rule may be defined such that information on whether the proposed methods are applicable (or information on the rules of the proposed methods) is reported by the BS to the UE or by a receiving UE to a receiving UE through a predefined signal (e.g., physical layer signal or higher layer signal).

Implementation example

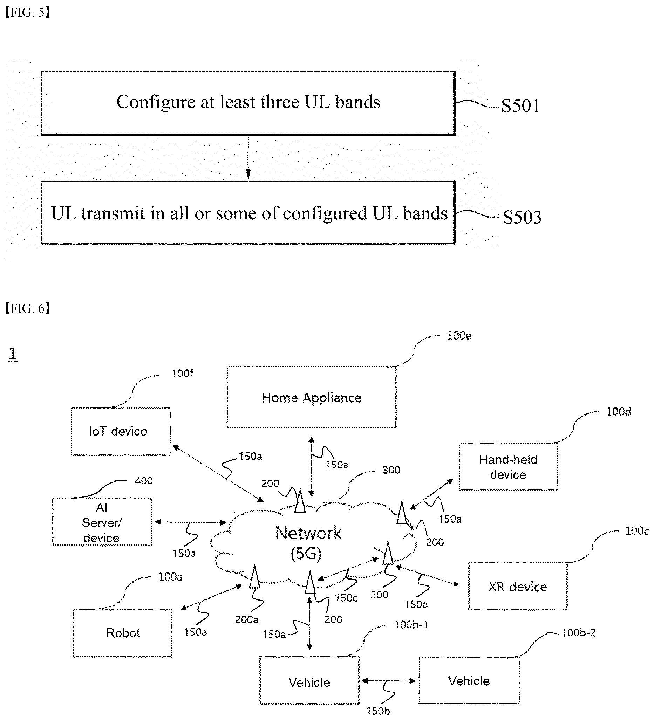

FIG. 5 is a flowchart of a signal transmission and reception method according to embodiments of the present disclosure.

Referring to FIG. 5, a signal transmission and reception method according to an embodiment of the present disclosure may be performed by a UE and may include configuring at least three UL bands (S501) and performing UL transmissions in all or some of the configured at least three UL bands. A signal transmission and reception method by a corresponding BS according to an embodiment of the present disclosure of FIG. 5 may include configuring at least three UL bands in a UE (S501) and receiving, from the UE, UL transmissions in all or some of the configured at least three UL bands (S503).

In addition to the operations of FIG. 5, one or more of the operations described in sections [1] to [5] may be performed.

In detail, sections [1] to [5] of the present specification disclose methods for allowing or limiting possible UL switching between three or more UL bands. Uplink switching is also referred to as Tx switching or UL Tx switching in this specification.

For example, referring to section [1], when UL switching is triggered based on UL transmissions, concurrent transmission in UL bands provided in a specific band combination from among all band combinations to be configured by UL bands may be limited.

In more detail, referring to method 1 of section [1], a specific band combination in which UL switching is limited may be determined based on the number of band combinations ($X\_1$ or $X\_2$) in which concurrent transmission is to be performed. Referring to method 2 of section [1], a specific band combination in which UL switching is limited may be determined based on signals and/or channels related to the UL switching within the specific band combination.

Referring to section [2], when UL switching is triggered based on UL transmissions, 2-port UL transmissions in a specific band from among the UL bands may be limited.

Referring to section [3], when UL switching is triggered based on UL transmissions, if the number of UL bands related to the UL switching is equal to or greater than a threshold value, the UL switching may not be allowed. If UL switching is not allowed, all or some of the UL transmissions that trigger UL switching are not performed.

Referring to section [4], when UL switching is triggered based on UL transmissions, if the total bandwidth of UL bands related to the UL switching is equal to or greater than a threshold value, the UL switching may not be allowed.

Referring to section [5], each of the operations in sections [1] to [4] may be performed alone or may be performed in combination with a plurality of operations.

In addition to the operations described with respect to FIG. 5, one or more of the operations described with reference to FIGS. 1 to 4 and/or the operations described in sections [1] to [3] may be additionally performed in combination.

Example of communication system to which the present disclosure is applied

The various descriptions, functions, procedures, proposals, methods, and/or operation flowcharts of the present disclosure described herein may be applied to, but not limited to, various fields requiring wireless communication/connectivity (e.g., 5G) between devices.

More specific examples will be described below with reference to the drawings. In the following drawings/description, like reference numerals denote the same or corresponding hardware blocks, software blocks, or function blocks, unless otherwise specified.

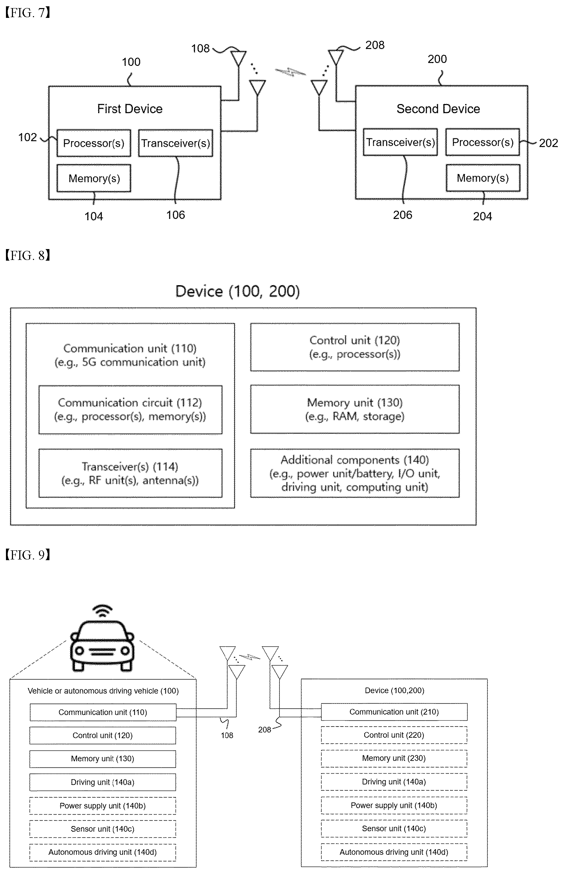

FIG. 7 illustrates a communication system 1 applied to the present disclosure.

Referring to FIG. 7, the communication system 1 applied to the present disclosure includes wireless devices, BSs, and a network. A wireless device is a device performing communication using radio access technology (RAT) (e.g., 5G NR (or New RAT) or LTE), also referred to as a communication/radio/5G device. The wireless devices may include, not limited to, a robot 100a, vehicles 100b-1 and 100b-2, an extended reality (XR) device 100c, a hand-held device 100d, a home appliance 100e, an IoT device 100f, and an artificial intelligence (AI) device/server 400. For example, the vehicles may include a vehicle having a wireless communication function, an autonomous driving vehicle, and a vehicle capable of vehicle-to-vehicle (V2V) communication. Herein, the vehicles may include an unmanned aerial vehicle (UAV) (e.g., a drone). The XR device may include an augmented reality (AR)/virtual reality (VR)/mixed reality (MR) device and may be implemented in the form of a head-mounted device (HMD), a head-up display (HUD) mounted in a vehicle, a television (TV), a smartphone, a computer, a wearable device, a home appliance, a digital signage, a vehicle, a robot, and so on. The hand-held device may include a smartphone, a smart pad, a wearable device (e.g., a smart watch or smart glasses), and a computer (e.g., a laptop). The home appliance may include a TV, a refrigerator, a washing machine, and so on. The IoT device may include a sensor, a smart meter, and so on. For example, the BSs and the network may be implemented as wireless devices, and a specific wireless device 200a may operate as a BS/network node for other wireless devices.

The wireless devices 100a to 100f may be connected to the network 300 via the BSs 200. An AI technology may be applied to the wireless devices 100a to 100f, and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without intervention of the BSs/network. For example, the vehicles 100b-1 and 100b-2 may perform direct communication (e.g., V2V/vehicle-to-everything (V2X) communication). The IoT device (e.g., a sensor) may perform direct communication with other IoT devices (e.g., sensors) or other wireless devices 100a to 100f.

Wireless communication/connections 150a, 150b, and 150c may be established between the wireless devices 100a to 100f/BS 200 and between the BSs 200. Herein, the wireless communication/connections may be established through various RATs (e.g., 5G NR) such as UL/DL communication 150a, sidelink communication 150b (or, D2D communication), or inter-BS communication (e.g., relay or integrated access backhaul (IAB)). Wireless signals may be transmitted and received between the wireless devices, between the wireless devices and the BSs, and between the BSs through the wireless communication/connections 150a, 150b, and 150c. For example, signals may be transmitted and receive don various physical channels through the wireless communication/connections 150a, 150b and 150c. To this end, at least a part of various configuration information configuring processes, various signal processing processes (e.g., channel encoding/decoding, modulation/demodulation, and resource mapping/demapping), and resource allocation processes, for transmitting/receiving wireless signals, may be performed based on the various proposals of the present disclosure.

Example of wireless device to which the present disclosure is applied

FIG. 8 illustrates wireless devices applicable to the present disclosure.

Referring to FIG. 8, a first wireless device 100 and a second wireless device 200 may transmit wireless signals through a variety of RATs (e.g., LTE and NR). {The first wireless device 100 and the second wireless device 200} may correspond to {the wireless device 100x and the BS 200} and/or {the wireless device 100x and the wireless device 100x} of FIG. 7.

The first wireless device 100 may include one or more processors 102 and one or more memories 104, and further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operation flowcharts disclosed in this document. For example, the processor(s) 102 may process information in the memory(s) 104 to generate first information/signals and then transmit wireless signals including the first information/signals through the transceiver(s) 106. The processor(s) 102 may receive wireless signals including second information/signals through the transceiver(s) 106 and then store information obtained by processing the second information/signals in the memory(s) 104. The memory(s) 104 may be connected to the processor(s) 102 and may store various pieces of information related to operations of the processor(s) 102. For example, the memory(s) 104 may store software code including instructions for performing all or a part of processes controlled by the processor(s) 102 or for performing the descriptions, functions, procedures, proposals, methods, and/or operation flowcharts disclosed in this document. The processor(s) 102 and the memory(s) 104 may be a part of a communication modem/circuit/chip designed to implement RAT (e.g., LTE or NR). The transceiver(s) 106 may be connected to the processor(s) 102 and transmit and/or receive wireless signals through the one or more antennas 108. Each of the transceiver(s) 106 may include a transmitter and/or a receiver. The transceiver(s) 106 may be interchangeably used with radio frequency (RF) unit(s). In the present disclosure, the wireless device may be a communication modem/circuit/chip.

The second wireless device 200 may include one or more processors 202 and one or more memories 204, and further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operation flowcharts disclosed in this document. For example, the processor(s) 202 may process information in the memory(s) 204 to generate third information/signals and then transmit wireless signals including the third information/signals through the transceiver(s) 206. The processor(s) 202 may receive wireless signals including fourth information/signals through the transceiver(s) 106 and then store information obtained by processing the fourth information/signals in the memory(s) 204. The memory(s) 204 may be connected to the processor(s) 202 and store various pieces of information related to operations of the processor(s) 202. For example, the memory(s) 204 may store software code including instructions for performing all or a part of processes controlled by the processor(s) 202 or for performing the descriptions, functions, procedures, proposals, methods, and/or operation flowcharts disclosed in this document. The processor(s) 202 and the memory(s) 204 may be a part of a communication modem/circuit/chip designed to implement RAT (e.g., LTE or NR). The transceiver(s) 206 may be connected to the processor(s) 202 and transmit and/or receive wireless signals through the one or more antennas 208. Each of the transceiver(s) 206 may include a transmitter and/or a receiver. The transceiver(s) 206 may be interchangeably used with RF unit(s). In the present disclosure, the wireless device may be a communication modem/circuit/chip.

Now, hardware elements of the wireless devices 100 and 200 will be described in greater detail. One or more protocol layers may be implemented by, not limited to, one or more processors 102 and 202. For example, the one or more processors 102 and 202 may implement one or more layers (e.g., functional layers such as physical (PHY), medium access control (MAC), radio link control (RLC), packet data convergence protocol (PDCP), RRC, and service data adaptation protocol (SDAP)). The one or more processors 102 and 202 may generate one or more protocol data units (PDUs) and/or one or more service data Units (SDUs) according to the descriptions, functions, procedures, proposals, methods, and/or operation flowcharts disclosed in this document. The one or more processors 102 and 202 may generate messages, control information, data, or information according to the descriptions, functions, procedures, proposals, methods, and/or operation flowcharts disclosed in this document and provide the messages, control information, data, or information to one or more transceivers 106 and 206. The one or more processors 102 and 202 may generate signals (e.g., baseband signals) including PDUs, SDUs, messages, control information, data, or information according to the descriptions, functions, procedures, proposals, methods, and/or operation flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operation flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. For example, one or more application specific integrated circuits (ASICs), one or more digital signal processors (DSPs), one or more digital signal processing devices (DSPDs), one or more programmable logic devices (PLDs), or one or more field programmable gate arrays (FPGAs) may be included in the one or more processors 102 and 202. The descriptions, functions, procedures, proposals, methods, and/or operation flowcharts disclosed in this document may be implemented using firmware or software, and the firmware or software may be configured to include the modules, procedures, or functions. Firmware or software configured to perform the descriptions, functions, procedures, proposals, methods, and/or operation flowcharts disclosed in this document may be included in the one or more processors 102 and 202 or may be stored in the one or more memories 104 and 204 and executed by the one or more processors 102 and 202. The descriptions, functions, procedures, proposals, methods, and/or operation flowcharts disclosed in this document may be implemented using firmware or software in the form of code, an instruction, and/or a set of instructions.

The one or more memories 104 and 204 may be connected to the one or more processors 102 and 202 and store various types of data, signals, messages, information, programs, code, instructions, and/or commands. The one or more memories 104 and 204 may be configured to include read-only memories (ROMs), random access memories (RAMs), electrically erasable programmable read-only memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or wireless signals/channels, mentioned in the methods and/or operation flowcharts of this document, to one or more other devices. The one or more transceivers 106 and 206 may receive user data, control information, and/or wireless signals/channels, mentioned in the descriptions, functions, procedures, proposals, methods, and/or operation flowcharts disclosed in this document, from one or more other devices. For example, the one or more transceivers 106 and 206 may be connected to the one or more processors 102 and 202 and transmit and receive wireless signals. For example, the one or more processors 102 and 202 may perform control so that the one or more transceivers 106 and 206 may transmit user data, control information, or wireless signals to one or more other devices. The one or more processors 102 and 202 may perform control so that the one or more transceivers 106 and 206 may receive user data, control information, or wireless signals from one or more other devices. The one or more transceivers 106 and 206 may be connected to the one or more antennas 108 and 208 and the one or more transceivers 106 and 206 may be configured to transmit and receive user data, control information, and/or wireless signals/channels, mentioned in the descriptions, functions, procedures, proposals, methods, and/or operation flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received wireless signals/channels from RF band signals into baseband signals in order to process received user data, control information, and wireless signals/channels using the one or more processors 102 and 202. The one or more transceivers 106 and 206 may convert the user data, control information, and wireless signals/channels processed using the one or more processors 102 and 202 from the baseband signals into the RF band signals. To this end, the one or more transceivers 106 and 206 may include (analog) oscillators and/or filters.

Example of use of wireless device to which the present disclosure is applied

FIG. 9 illustrates another example of a wireless device applied to the present disclosure. The wireless device may be implemented in various forms according to a use case/service (refer to FIG. 7).

Referring to FIG. 9, wireless devices 100 and 200 may correspond to the wireless devices 100 and 200 of FIG. 8 and may be configured to include various elements, components, units/portions, and/or modules. For example, each of the wireless devices 100 and 200 may include a communication unit 110, a control unit 120, a memory unit 130, and additional components 140. The communication unit 110 may include a communication circuit 112 and transceiver(s) 114. For example, the communication circuit 112 may include the one or more processors 102 and 202 and/or the one or more memories 104 and 204 of FIG. 8. For example, the transceiver(s) 114 may include the one or more transceivers 106 and 206 and/or the one or more antennas 108 and 208 of FIG. 8. The control unit 120 is electrically connected to the communication unit 110, the memory 130, and the additional components 140 and provides overall control to the wireless device. For example, the control unit 120 may control an electric/mechanical operation of the wireless device based on programs/code/instructions/information stored in the memory unit 130. The control unit 120 may transmit the information stored in the memory unit 130 to the outside (e.g., other communication devices) via the communication unit 110 through a wireless/wired interface or store, in the memory unit 130, information received through the wireless/wired interface from the outside (e.g., other communication devices) via the communication unit 110.

The additional components 140 may be configured in various manners according to type of the wireless device. For example, the additional components 140 may include at least one of a power unit/battery, input/output (I/O) unit, a driving unit, and a computing unit. The wireless device may be implemented in the form of, not limited to, the robot (100a of FIG. 7), the vehicles (100b-1 and 100b-2 of FIG. 7), the XR device (100c of FIG. 7), the hand-held device (100d of FIG. 7), the home appliance (100e of FIG. 7), the IoT device (100f of FIG. 7), a digital broadcasting terminal, a hologram device, a public safety device, an MTC device, a medical device, a FinTech device (or a finance device), a security device, a climate/environment device, the AI server/device (400 of FIG. 7), the BSs (200 of FIG. 7), a network node, or the like. The wireless device may be mobile or fixed according to a use case/service.

In FIG. 9, all of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module in the wireless devices 100 and 200 may further include one or more elements. For example, the control unit 120 may be configured with a set of one or more processors. For example, the control unit 120 may be configured with a set of a communication control processor, an application processor, an electronic control unit (ECU), a graphical processing unit, and a memory control processor. In another example, the memory 130 may be configured with a RAM, a dynamic RAM (DRAM), a ROM, a flash memory, a volatile memory, a non-volatile memory, and/or a combination thereof.

<u>Example of vehicle or autonomous driving vehicle to which the present disclosure is applied</u>

FIG. 10 illustrates a vehicle or an autonomous driving vehicle applied to the present disclosure. The vehicle or autonomous driving vehicle may be implemented as a mobile robot, a car, a train, a manned/unmanned aerial vehicle (AV), a ship, or the like.

Referring to FIG. 10, a vehicle or autonomous driving vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 9, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous driving vehicle 100. The control unit 120 may include an ECU. The driving unit 140a may enable the vehicle or the autonomous driving vehicle 100 to drive on a road. The driving unit 140a may include an engine, a motor, a powertrain, a wheel, a brake, a steering device, and so on. The power supply unit 140b may supply power to the vehicle or the autonomous driving vehicle 100 and include a wired/wireless charging circuit, a battery, and so on. The sensor unit 140c may acquire information about a vehicle state, ambient environment information, user information, and so on. The sensor unit 140c may include an inertial measurement unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, and so on. The autonomous driving unit 140d may implement technology for maintaining a lane on which the vehicle is driving, technology for automatically adjusting speed, such as adaptive cruise control, technology for autonomously driving along a determined path, technology for driving by automatically setting a route if a destination is set, and the like.

For example, the communication unit 110 may receive map data, traffic information data, and so on from an external server. The autonomous driving unit 140d may generate an autonomous driving route and a driving plan from the obtained data. The control unit 120 may control the driving unit 140a such that the vehicle or autonomous driving vehicle 100 may move along the autonomous driving route according to the driving plan (e.g., speed/direction control). During autonomous driving, the communication unit 110 may aperiodically/periodically acquire recent traffic information data from the external server and acquire surrounding traffic information data from neighboring vehicles. During autonomous driving, the sensor unit 140c may obtain information about a vehicle state and/or surrounding environment information. The autonomous driving unit 140d may update the autonomous driving route and the driving plan based on the newly obtained data/information. The communication unit 110 may transfer information about a vehicle position, the autonomous driving route, and/or the driving plan to the external server. The external server may predict traffic information data using AI technology based on the information collected from vehicles or autonomous driving vehicles and provide the predicted traffic information data to the vehicles or the autonomous driving vehicles.

Those skilled in the art will appreciate that the present disclosure may be carried out in other specific ways than those set forth herein without departing from the spirit and essential characteristics of the present disclosure. The above embodiments are therefore to be construed in all aspects as illustrative and not restrictive. The scope of the disclosure should be determined by the appended claims and their legal equivalents, not by the above description, and all changes coming within the meaning and equivalency range of the appended claims are intended to be embraced therein.

**INDUSTRIAL APPLICABILITY**

As described above, the present disclosure is applicable to various wireless communication systems.

**Claims**

1.  A method of transmitting and receiving a signal by a user equipment (UE) in a wireless communication system, the method comprising:

    configuring at least three uplink (UL) bands; and
    performing UL transmissions in all or some of the at least three UL bands,

wherein UL switching is triggered based on the UL transmissions, and

for the UL switching, from among all band combinations configured by the at least three UL bands, concurrent transmission in UL bands provided in a specific band combination is limited.

2. The method of claim 1, wherein the specific band combination is reported through a UE capability.

3. The method of claim 1, wherein the specific band combination is configured via radio resource control (RRC) signaling.

4. The method of claim 1, wherein the specific band combination is determined based on a number of band combinations in which concurrent transmission is to be performed.

5. The method of claim 1, wherein the specific band combination is determined based on a signal and/or channel related to the UL switching in the specific band combination.

6. The method of claim 1, wherein second UL transmissions are configured in all or some of the at least three UL bands,

second UL switching is triggered based on the second UL transmissions, and

based on a number of UL bands related to the second UL switching being greater than or equal to a threshold value, the second UL switching is not allowed.

7. The method of claim 6, wherein, based on the second UL switching not being allowed, all or some of the second UL transmissions are not performed.

8. The method of claim 1, wherein second UL transmissions are configured in all or some of the at least three UL bands,

second UL switching is triggered based on the second UL transmissions, and

based on a total bandwidth of UL bands related to the second UL switching being greater than or equal to a threshold value, the second UL switching is not allowed.

9. A user equipment (UE) for transmitting and receiving a signal in a wireless communication system, the UE comprising:

at least one transceiver;

at least one processor; and

at least one memory operably connected to the at least one processor and storing instructions that, when executed, cause the at least one processor to perform a specific operation,

wherein the specific operation includes:

configuring at least three uplink (UL) bands; and

performing UL transmissions in all or some of the at least three UL bands,

UL switching is triggered based on the UL transmissions, and

for the UL switching, from among all band combinations configured by the at least three UL bands, concurrent transmission in UL bands provided in a specific band combination is limited.

10. A device for a user equipment (UE), the device comprising:

at least one processor; and

at least one computer memory operably connected to the at least one processor and configured to, when executed, cause the at least one processor to perform an operation including:

configuring at least three uplink (UL) bands; and

performing UL transmissions in all or some of the at least three UL bands,

wherein UL switching is triggered based on the UL transmissions, and

for the UL switching, from among all band combinations configured by the at least three UL bands, concurrent transmission in UL bands provided in a specific band combination is limited.

11. A computer-readable nonvolatile storage medium including at least one computer program that causes a user equipment (UE) including at least one processor to perform an operation, the operation comprising:

configuring at least three uplink (UL) bands; and
performing UL transmissions in all or some of the at least three UL bands,
wherein UL switching is triggered based on the UL transmissions, and
for the UL switching, from among all band combinations configured by the at least three UL bands, concurrent transmission in UL bands provided in a specific band combination is limited.

12. A method of transmitting and receiving a signal by a base station (BS) in a wireless communication system, the method comprising:

configuring at least three uplink (UL) bands in a user equipment (UE); and
receiving, from the UE, UL transmissions in all or some of the at least three UL bands,
wherein UL switching is triggered based on the UL transmissions, and
for the UL switching, from among all band combinations configured by the at least three UL bands, concurrent transmission in UL bands provided in a specific band combination is limited.

13. A base station (BS) for transmitting and receiving a signal in a wireless communication system, the BS comprising:

at least one transceiver;
at least one processor; and
at least one memory operably connected to the at least one processor and storing instructions that, when executed, cause the at least one processor to perform a specific operation,
wherein the specific operation includes:

configuring at least three uplink (UL) bands in a user equipment (UE); and
receiving, from the UE, UL transmissions in all or some of the at least three UL bands,
UL switching is triggered based on the UL transmissions, and
for the UL switching, from among all band combinations configured by the at least three UL bands, concurrent transmission in UL bands provided in a specific band combination is limited.

【FIG. 1】

| ・・・・・・ | One Frame (10ms) | ・・・・・・ |

| ・・・・・・ | Half-Frame (5ms) | Half-Frame (5ms) | ・・・・・・ |

| ・・・・・・ | Subframe 0 (1ms) | ・・・・・・ | Subframe 4 (1ms) | Subframe 5 (1ms) | ・・・・・・ | Subframe 9 (1ms) | ・・・・・・ |

Subframe (1ms)

15KHz — Slot (14 symbols)

1ms

30KHz — Slot 0 (14 symbols) | Slot 1

500us

60KHz — Slot 0 (14 symbols) | Slot 1 | Slot 2 | Slot 3

250us

120KHz — Slot 0 (14 symbols) | Slot 1 | Slot 2 | Slot 3 | Slot 4 | Slot 5 | Slot 6 | Slot 7

125us

【FIG. 2】

【FIG. 3】

【FIG. 4】

Previous transmission       Current transmission

(a)

Previous transmission       Current transmission

(b)

【FIG. 5】

Configure at least three UL bands — S501

UL transmit in all or some of configured UL bands — S503

【FIG. 6】

【FIG. 7】

【FIG. 8】

Device (100, 200)

Communication unit (110)
(e.g., 5G communication unit)

Control unit (120)
(e.g., processor(s))

Communication circuit (112)
(e.g., processor(s), memory(s))

Memory unit (130)
(e.g., RAM, storage)

Transceiver(s) (114)
(e.g., RF unit(s), antenna(s))

Additional components (140)
(e.g., power unit/battery, I/O unit,
driving unit, computing unit)

【FIG. 9】

Vehicle or autonomous driving vehicle (100)

Communication unit (110)

Control unit (120)

Memory unit (130)

Driving unit (140a)

Power supply unit (140b)

Sensor unit (140c)

Autonomous driving unit (140d)

Device (100,200)

Communication unit (210)

Control unit (220)

Memory unit (230)

Driving unit (140a)

Power supply unit (140b)

Sensor unit (140c)

Autonomous driving unit (140d)

## INTERNATIONAL SEARCH REPORT

International application No.

**PCT/KR2023/014261**

### A. CLASSIFICATION OF SUBJECT MATTER

**H04W 72/23**(2023.01)i; **H04W 72/04**(2009.01)i; **H04W 72/21**(2023.01)i; **H04W 8/24**(2009.01)i; **H04L 5/00**(2006.01)i; **H04W 72/12**(2009.01)i; **H04B 7/0404**(2017.01)i

According to International Patent Classification (IPC) or to both national classification and IPC

### B. FIELDS SEARCHED

Minimum documentation searched (classification system followed by classification symbols)

H04W 72/23(2023.01); H04W 72/04(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 상향링크 스위칭(uplink switching), 상향링크 대역(uplink band), 트리거 (trigger), 대역 조합(band combination), 동시 전송(simultaneous transmission), 제한(restriction)

### C. DOCUMENTS CONSIDERED TO BE RELEVANT

| Category* | Citation of document, with indication, where appropriate, of the relevant passages | Relevant to claim No. |
|---|---|---|
| Y | ZTE. Discussion on Multi-carrier UL Tx switching scheme. R1-2205963, 3GPP TSG RAN WG1 #110. Toulouse, France. 12 August 2022.<br>See sections 1, 3, 3.1.1 and 3.4; and tables 1-2. | 1-13 |
| Y | NTT DOCOMO, INC. Potential issues on UL Tx switching schemes across up to 3 or 4 bands. R2-2208324, 3GPP TSG RAN WG2 #119-e, Electronic meeting. 10 August 2022.<br>See sections 1 and 2.2.4. | 1-13 |
| Y | SAMSUNG. On multi-carrier UL Tx switching. R1-2206845, 3GPP TSG RAN WG1 #110. Toulouse, France. 12 August 2022.<br>See section 3. | 8 |
| A | INTERDIGITAL INC. MULTI-CARRIER UL TX SWITCHING SCHEME. R1-2206664, 3GPP TSG RAN WG1 #110. Toulouse, France. 12 August 2022.<br>See section 2. | 1-13 |
| A | WO 2022-150977 A1 (ZTE CORPORATION) 21 July 2022 (2022-07-21)<br>See pages 7-51; and figures 1A-19. | 1-13 |

☐ Further documents are listed in the continuation of Box C.    ☑ See patent family annex.

| | |
|---|---|
| \* Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **11 January 2024** | **11 January 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

INTERNATIONAL SEARCH REPORT
Information on patent family members

| International application No. |
| --- |
| **PCT/KR2023/014261** |

| Patent document cited in search report | | | Publication date (day/month/year) | Patent family member(s) | | | Publication date (day/month/year) |
| --- | --- | --- | --- | --- | --- | --- | --- |
| WO | 2022-150977 | A1 | 21 July 2022 | CN | 115699942 | A | 03 February 2023 |
| | | | | US | 2023-0046553 | A1 | 16 February 2023 |

Form PCT/ISA/210 (patent family annex) (July 2022)